# EUROPEAN PATENT APPLICATION

(11) **EP 4 546 153 A1**
(43) Date of publication of application: **30.04.2025**
(21) Application number: 23849169.0
(22) Date of filing: 07.07.2023
(51) Int. Cl.: G06F 16/23

(54) **METHOD AND APPARATUS FOR PROCESSING BASE TABLE AND GLOBAL SECONDARY INDEX THEREOF IN DISTRIBUTED DATABASE**

(30) Priority: 05.08.2022 CN 202210939522
(71) Applicant: Huawei Technologies Co., Ltd., Shenzhen, Guangdong 518129 (CN)
(72) Inventor: ZHOU, Zhaoqi, Shenzhen, Guangdong 518129 (CN); ZHANG, Shujie, Shenzhen, Guangdong 518129 (CN); LIU, Zonghao, Shenzhen, Guangdong 518129 (CN); LIU, Baozhu, Shenzhen, Guangdong 518129 (CN)
(74) Representative: Maiwald GmbH
(86) International application number: PCT/CN2023/106369
(87) International publication number: WO 2024/027460

(57) **Abstract**

This application provides a method and an apparatus for processing a base table and a global secondary index of the base table in a distributed database, applied to a first node. The method includes: in response to a first indication, indicating a target second node in at least one second node to perform a target operation, where the first indication indicates to update a base table, the base table is stored in the at least one second node in a distributed manner, and the target operation is used to update the base table; receiving target information from the target second node, where the target information is used to update a global secondary index of the base table, and the global secondary index is stored in at least one third node in a distributed manner; and indicating, based on the target information, a target third node in the at least one third node to update the global secondary index. According to the solutions provided in this application, data consistency between the base table and the global secondary index of the base table can be improved, accuracy of data of the global secondary index can be improved, and accuracy of use of the base table and the global secondary index of the base table can be improved.

## Description

### CROSS-REFERENCE TO RELATED APPLICATIONS

This application claims priority to Chinese Patent Application No. 202210939522.2, filed with the China National Intellectual Property Administration on August 5, 2022 and entitled "METHOD AND APPARATUS FOR PROCESSING BASE TABLE AND GLOBAL SECONDARY INDEX OF BASE TABLE IN DISTRIBUTED DATABASE", which is incorporated herein by reference in its entirety.

### TECHNICAL FIELD

This application relates to the field of data processing technologies, and in particular, to a method and an apparatus for processing a base table and a global secondary index of the base table in a distributed database.

### BACKGROUND

A base table is an object used to store data in a distributed database. The base table may be a set of a plurality of rows and a plurality of columns of data that is stored in at least one data node in a distributed manner. Data in a same column belongs to a same attribute, and data in a same row may be stored in a same data node. Currently, the base table may have one or more global secondary indexes, and each global secondary index of the base table may include some columns of data in the base table. Therefore, the global secondary index of the base table may be used for data query. Similar to a storage manner of data in the base table, data of the global secondary index of the base table may also be stored in at least one data node in a distributed manner.

When data query is performed based on the global secondary index of the base table, to ensure query accuracy, data consistency between the global secondary index and the base table needs to be maintained as much as possible. In other words, data in each column of the global secondary index is maintained consistent with data in a corresponding column of the global secondary index in the base table. However, in a process of using the base table, the data included in the base table may change. Therefore, currently, the base table and the global secondary index are generally updated in an asynchronous update manner, to maintain data consistency between the global secondary index and the base table. In the method, an update operation on the base table may be performed immediately, and an update operation on the global secondary index of the base table needs to be performed after an update period of the global secondary index arrives. In the method, although final data consistency between the global secondary index and the base table can be achieved, there may be a delay in updating the global secondary index in comparison with updating of the base table. As a result, in the method, it is difficult to maintain high data consistency between the global secondary index and the base table, and accuracy of the base table and the global secondary index of the base table during use is reduced.

### SUMMARY

This application provides a method and an apparatus for processing a base table and a global secondary index of the base table in a distributed database, to improve data consistency between the base table and the global secondary index of the base table, and improve accuracy of the base table and the global secondary index of the base table during use.

According to a first aspect, this application provides a method for processing a base table and a global secondary index of the base table in a distributed database, applied to a first node. The method includes: in response to a first indication, indicating a target second node in at least one second node to perform a target operation, where the first indication indicates to update a base table, the base table is stored in the at least one second node in a distributed manner, and the target operation is used to update the base table; receiving target information from the target second node, where the target information is used to update a global secondary index of the base table, and the global secondary index is stored in at least one third node in a distributed manner; and indicating, based on the target information, a target third node in the at least one third node to update the global secondary index.

In the method, both the base table and the global secondary index of the base table may be stored in a plurality of nodes in a distributed manner, and a node storing the base table may be the same as or different from a node storing the global secondary index of the base table. When controlling to update the base table, the first node may synchronously control, based on the target information returned by a node that performs an update operation on the base table, to correspondingly update the global secondary index of the base table. This can ensure high consistency between base table data and global secondary index data, and improve accuracy of the base table and the global secondary index of the base table during use.

In a possible design, the global secondary index includes at least one attribute in the base table and location information, where the location information indicates a location, in the base table, of a tuple to which data in the at least one attribute belongs.

In this method, the global secondary index of the base table may include the location information, and a storage location corresponding to data (or a tuple) in the base table may be determined based on the location information. Therefore, the global secondary index of the base table does not need to include a primary key, a distribution key, a partition key, or the like of the base table, so that a data volume of the global secondary index of the base table can be appropriately reduced, and index bloat can be reduced. Especially when the primary key and the distribution key of the base table relate to a large quantity of attribute columns, a volume of data that needs to be maintained after the global secondary index is created can be significantly reduced, and efficiency of using the global secondary index can be improved.

In a possible design, location information corresponding to each piece of data includes first location information and second location information, the first location information indicates a node in which a tuple to which the corresponding data belongs is located, and the second location information indicates a storage location, in the node, of the tuple to which the corresponding data belongs.

In the method, a node in which data (or a tuple) is located can be quickly determined based on the first location information included in the location information in a plurality of nodes that store a base table, and a more accurate storage location can be further determined in the node based on the second location information included in the location information. Therefore, data can be quickly and efficiently located based on the first location information and the second location information in the location information.

In a possible design, the target information includes first target data and location information corresponding to changed data, or the target information includes first target data, target distribution key data, and second location information corresponding to changed data. The first target data is data that belongs to the at least one attribute and that is included in the changed data, the changed data is data in which there is a difference between first base table data and second base table data, the first base table data is data included in the base table before the base table is updated, the second base table data is data included in the base table after the base table is updated, the target distribution key data is data that is included in the changed data and that is used as a distribution key of the base table, and the target distribution key data is used to determine first location information corresponding to the changed data.

In the method, the changed data is data changed in the base table, and the first target data is data that is in the changed data and whose attribute is the same as an attribute of the global secondary index of the base table. In this case, data in the global secondary index of the base table may be updated based on the first target data, so that the data in the global secondary index of the base table correspondingly changes with the data in the base table, thereby maintaining data consistency between the global secondary index and the base table. The target distribution key data may be used to determine the first location information corresponding to the changed data. Therefore, the location information corresponding to the data changed in the base table can be correspondingly updated based on the target distribution key data and the second location information corresponding to the changed data, or based on the location information corresponding to the changed data. This ensures accuracy of the location information in the global secondary index.

In a possible design, before the receiving target information from the target second node, the method further includes: when the first indication specifically indicates to update a part of data included in the base table, determining that there is an intersection between an attribute to which the part of data belongs and the at least one attribute.

In the method, when there is an intersection between the attribute to which the updated data in the base table belongs and an attribute in the global secondary index of the base table, it indicates that the data updated in the base table affects data consistency between the base table and the global secondary index. Therefore, when a data update status of the base table complies with the scenario, the global secondary index of the base table is triggered to be synchronously updated. This can ensure data consistency between the base table and the global secondary index.

In a possible design, the indicating, based on the target information, a target third node in the at least one third node to update the global secondary index includes: when the target information includes the first target data, the target distribution key data, and the second location information corresponding to the changed data, determining, based on the target distribution key data, the first location information corresponding to the changed data; and sending update information to the target third node, and indicating the target third node to update, based on the update information, data that is in the global secondary index and that is stored in the target third node, where the update information includes the first location information corresponding to the changed data and information other than the target distribution key data in the target information. The target third node is each of the plurality of third nodes; or the target third node is a node that is in the at least one third node and that is configured to store the first target data.

In the method, the first node may process the first location information that corresponds to the changed data and that is obtained based on the distribution key data through calculation, and after the processing, send, to the target third node, the data changed in the base table and the first location information and the second location information that correspond to the changed data. In this case, the target third node may directly update the global secondary index based on the received information. In this process, only the first node needs to perform calculation processing once. This reduces a calculation amount of calculation processing performed by the target third node, reduces resource occupation on the target third node, and improves storage performance of the target third node.

In a possible design, the indicating, based on the target information, a target third node in the at least one third node to update the global secondary index includes: sending the target information to the target third node, and indicating the target third node to update, based on the target information, data that is in the global secondary index and that is stored in the target third node. The target third node is each of the plurality of third nodes; or the target third node is a node that is in the at least one third node and that is configured to store the first target data.

In the method, the first node may directly indicate, to the target third node, the received target information that is used to update the global secondary index of the base table. Therefore, the first node mainly forwards the target information, and a data processing and calculation amount of the first node is low. This can avoid occupying a large quantity of resources of the first node, and reduce impact on performance of the first node.

In a possible design, the method further includes: receiving a second indication, where the second indication indicates to obtain second target data that meets a first condition and that is in the base table; determining, based on the second indication, an attribute to which the second target data belongs; and when the at least one attribute includes all attributes to which the second target data belongs, selecting, from the data included in the global secondary index, the second target data that meets the first condition.

In the method, when the attribute in the global secondary index of the base table covers all attributes of to-be-queried data, a result obtained by querying the base table for the data and a result obtained by querying the global secondary index for the data are consistent, and the data volume of the global secondary index is less than a data volume of the base table. Therefore, in this scenario, a speed and efficiency of directly querying the base table for the data are higher. Therefore, compared with a conventional method for querying a base table for data, the method can improve a speed and efficiency of data query.

In a possible design, the method further includes: when the at least one attribute does not include all the attributes to which the second target data belongs, and there is an intersection between a target attribute in the at least one attribute and the attribute to which the second target data belongs, determining the second target data based on the global secondary index, where data in the target attribute is used as an index key of the global secondary index.

In the method, when the attribute in the global secondary index of the base table covers a part of attributes of the to-be-queried data, it indicates that the global secondary index includes only a part of data in the to-be-queried data. Therefore, not all the to-be-queried data can be obtained by directly querying the global secondary index. The global secondary index includes the location information of the data in the base table, and the part of data is associated with the to-be-queried data to some extent. Therefore, location information corresponding to the part of data in the global secondary index may be used to locate a storage location of the to-be-queried data, and data may also be queried based on the global secondary index, so as to improve a speed and efficiency of data query.

In a possible design, the determining the second target data based on the global secondary index includes: selecting, from the data included in the global secondary index, third target data that meets a part or all of the first condition; and obtaining, from a storage location indicated by location information corresponding to the third target data, the second target data that meets the first condition.

In the method, when the attribute in the global secondary index of the base table covers a part of attributes of the to-be-queried data, data in a small range in the base table may be located based on location information corresponding to the data in the part of attributes in the global secondary index, and the to-be-queried data may be obtained by querying the data in the small range. Therefore, compared with a conventional method for querying a base table for data, this method can improve a speed and efficiency to some extent.

In a possible design, the global secondary index further includes version information, the version information indicates a version of the tuple to which the data in the at least one attribute belongs, and a version of each tuple is used to determine whether the corresponding tuple is valid.

In the method, the global secondary index of the base table may include version information, and validity of the data (or the tuple) in the base table may be determined based on the version information. Therefore, when the data in the base table is processed, a range of data that can be processed can be determined based on the version information, to avoid processing of invalid data, and ensure accuracy of processing the data in the base table.

According to a second aspect, this application provides a method for processing a base table and a global secondary index of the base table in a distributed database, applied to a second node. The method includes: performing a target operation based on an indication of a first node, where the target operation is used to update a base table, and the base table is stored in a distributed manner in at least one node including the second node; and sending target information to the first node, so that the first node indicates, based on the target information, a target third node in at least one third node to update a global secondary index of the base table, where the target information is used to update the global secondary index, and the global secondary index is stored in the at least one third node in a distributed manner.

In the method, both the base table and the global secondary index of the base table may be stored in a plurality of nodes in a distributed manner, and a node storing the base table may be the same as or different from a node storing the global secondary index of the base table. The second node may update the base table based on controlling by the first node, and return the target information used to update the global secondary index of the base table to the first node after updating the base table, so that the first node can synchronously control corresponding update of the global secondary index of the base table, to ensure high consistency between base table data and global secondary index data, improve accuracy of using the base table and the global secondary index, and further improve accuracy of the base table and the global secondary index of the base table during use.

In a possible design, the global secondary index includes at least one attribute in the base table and location information, where the location information indicates a location, in the base table, of a tuple to which data in the at least one attribute belongs.

In a possible design, location information corresponding to each piece of data includes first location information and second location information, the first location information indicates a node in which a tuple to which the corresponding data belongs is located, and the second location information indicates a storage location, in the node, of the tuple to which the corresponding data belongs.

In a possible design, the target information includes first target data and location information corresponding to changed data, or the target information includes first target data, target distribution key data, and second location information corresponding to changed data. The first target data is data that belongs to the at least one attribute and that is included in the changed data, the changed data is data in which there is a difference between first base table data and second base table data, the first base table data is data included in the base table before the base table is updated, the second base table data is data included in the base table after the base table is updated, the target distribution key data is data that is included in the changed data and that is used as a distribution key of the base table, and the target distribution key data is used to determine first location information corresponding to the changed data.

In a possible design, the global secondary index further includes version information, the version information indicates a version of the tuple to which the data in the at least one attribute belongs, and a version of each tuple is used to determine whether the corresponding tuple is valid.

According to a third aspect, this application provides a data processing apparatus, used in a first node. The apparatus includes a transceiver unit and a processing unit. The processing unit is configured to indicate, in response to a first indication by using the transceiver unit, a target second node in at least one second node to perform a target operation, where the first indication indicates to update a base table, the base table is stored in the at least one second node in a distributed manner, and the target operation is used to update the base table. The transceiver unit is configured to receive target information from the target second node, where the target information is used to update a global secondary index of the base table, and the global secondary index is stored in at least one third node in a distributed manner. The processing unit is further configured to indicate, based on the target information by using the transceiver unit, a target third node in the at least one third node to update the global secondary index.

In a possible design, the global secondary index includes at least one attribute in the base table and location information, where the location information indicates a location, in the base table, of a tuple to which data in the at least one attribute belongs.

In a possible design, location information corresponding to each piece of data includes first location information and second location information, the first location information indicates a node in which a tuple to which the corresponding data belongs is located, and the second location information indicates a storage location, in the node, of the tuple to which the corresponding data belongs.

In a possible design, the target information includes first target data and location information corresponding to changed data, or the target information includes first target data, target distribution key data, and second location information corresponding to changed data. The first target data is data that belongs to the at least one attribute and that is included in the changed data, the changed data is data in which there is a difference between first base table data and second base table data, the first base table data is data included in the base table before the base table is updated, the second base table data is data included in the base table after the base table is updated, the target distribution key data is data that is included in the changed data and that is used as a distribution key of the base table, and the target distribution key data is used to determine first location information corresponding to the changed data.

In a possible design, the processing unit is further configured to: before the transceiver unit receives the target information from the target second node, when the first indication specifically indicates to update a part of data included in the base table, determine that there is an intersection between an attribute to which the part of data belongs and the at least one attribute.

In a possible design, when indicating, based on the target information and by using the transceiver unit, the target third node in the at least one third node to update the global secondary index, the processing unit is specifically configured to: when the target information includes the first target data, the target distribution key data, and the second location information corresponding to the changed data, determine, based on the target distribution key data, the first location information corresponding to the changed data; and send, by using the transceiver unit, update information to the target third node, and indicate the target third node to update, based on the update information, data that is in the global secondary index and that is stored in the target third node, where the update information includes the first location information corresponding to the changed data and information other than the target distribution key data in the target information. The target third node is each of the plurality of third nodes; or the target third node is a node that is in the at least one third node and that is configured to store the first target data.

In a possible design, when indicating, based on the target information and by using the transceiver unit, the target third node in the at least one third node to update the global secondary index, the processing unit is specifically configured to: send, by using the transceiver unit, the target information to the target third node, and indicate the target third node to update, based on the target information, data that is in the global secondary index and that is stored in the target third node. The target third node is each of the plurality of third nodes; or the target third node is a node that is in the at least one third node and that is configured to store the first target data.

In a possible design, the processing unit is further configured to: receive a second indication by using the transceiver unit, where the second indication indicates to obtain second target data that meets a first condition and that is in the base table; determine, based on the second indication, an attribute to which the second target data belongs; and when the at least one attribute includes all attributes to which the second target data belongs, select, from the data included in the global secondary index, the second target data that meets the first condition.

In a possible design, the processing unit is further configured to: when the at least one attribute does not include all the attributes to which the second target data belongs, and there is an intersection between a target attribute in the at least one attribute and the attribute to which the second target data belongs, determine the second target data based on the global secondary index, where data in the target attribute is used as an index key of the global secondary index.

In a possible design, when determining the second target data based on the global secondary index, the processing unit is specifically configured to: select, from the data included in the global secondary index, third target data that meets a part or all of the first condition; and obtain, from a storage location indicated by location information corresponding to the third target data, the second target data that meets the first condition.

In a possible design, the global secondary index further includes version information, the version information indicates a version of the tuple to which the data in the at least one attribute belongs, and a version of each tuple is used to determine whether the corresponding tuple is valid.

According to a fourth aspect, this application provides a data processing apparatus, used in a second node. The apparatus includes a transceiver unit and a processing unit. The processing unit is configured to perform a target operation based on an indication of a first node, where the target operation is used to update a base table, and the base table is stored in a distributed manner in at least one node including the second node. The transceiver unit is configured to send target information to the first node, so that the first node indicates, based on the target information, a target third node in at least one third node to update a global secondary index of the base table, where the target information is used to update the global secondary index, and the global secondary index is stored in the at least one third node in a distributed manner.

In a possible design, the global secondary index includes at least one attribute in the base table and location information, where the location information indicates a location, in the base table, of a tuple to which data in the at least one attribute belongs.

In a possible design, location information corresponding to each piece of data includes first location information and second location information, the first location information indicates a node in which a tuple to which the corresponding data belongs is located, and the second location information indicates a storage location, in the node, of the tuple to which the corresponding data belongs.

In a possible design, the target information includes first target data and location information corresponding to changed data, or the target information includes first target data, target distribution key data, and second location information corresponding to changed data. The first target data is data that belongs to the at least one attribute and that is included in the changed data, the changed data is data in which there is a difference between first base table data and second base table data, the first base table data is data included in the base table before the base table is updated, the second base table data is data included in the base table after the base table is updated, the target distribution key data is data that is included in the changed data and that is used as a distribution key of the base table, and the target distribution key data is used to determine first location information corresponding to the changed data.

In a possible design, the global secondary index further includes version information, the version information indicates a version of the tuple to which the data in the at least one attribute belongs, and a version of each tuple is used to determine whether the corresponding tuple is valid.

According to a fifth aspect, this application provides a data processing apparatus. The apparatus includes a memory and at least one processor. The memory is configured to store a computer program. The processor is configured to execute the computer program stored in the memory, to implement the method according to any one of the first aspect or the possible designs of the first aspect, or implement the method according to any one of the second aspect or the possible designs of the second aspect.

According to a sixth aspect, this application provides a distributed database system, including the first node, the at least one second node, and the at least one third node according to any one of the first aspect or the possible designs of the first aspect, or including the first node, the at least one node, and the at least one third node according to any one of the second aspect or the possible designs of the second aspect.

According to a seventh aspect, this application provides a computer storage medium. The computer storage medium stores a computer-readable program. When the computer-readable program is run on a computer, the computer is enabled to perform the method according to any one of the first aspect or the possible designs of the first aspect, or the computer is enabled to perform the method according to any one of the second aspect or the possible designs of the second aspect.

According to an eighth aspect, this application provides a computer program product. When the computer program product runs on a computer, the computer is enabled to perform the method according to any one of the first aspect or the possible designs of the first aspect, or the computer is enabled to perform the method according to any one of the second aspect or the possible designs of the second aspect.

According to a ninth aspect, an embodiment of this application provides a chip. The chip is configured to read a computer program stored in a memory, to perform the method according to any one of the first aspect or the possible designs of the first aspect, or perform the method according to any one of the second aspect or the possible designs of the second aspect.

According to a tenth aspect, an embodiment of this application provides a chip system. The chip system includes a processor, configured to support a computer apparatus in implementing the method according to any one of the first aspect or the possible designs of the first aspect, or implementing the method according to any one of the second aspect or the possible designs of the second aspect.

In a possible design, the chip system further includes a memory, and the memory is configured to store a program and data that are necessary for the computer apparatus.

In a possible design, the chip system includes a chip, or includes a chip and another discrete component.

For beneficial effects of the second aspect to the tenth aspect, refer to descriptions of the beneficial effects of the first aspect. Details are not described herein again.

### BRIEF DESCRIPTION OF DRAWINGS

FIG. 1a is a diagram of an architecture of a distributed database system according to an embodiment of this application;
FIG. 1b is a diagram of an architecture of a distributed database system according to an embodiment of this application;
FIG. 2 is a diagram of a method for processing a base table and a global secondary index of the base table in a distributed database according to an embodiment of this application;
FIG. 3 is a diagram of data distribution in a distributed database according to an embodiment of this application;
FIG. 4 is a flowchart of a method for processing a base table and a global secondary index of the base table according to an embodiment of this application;
FIG. 5 is a diagram of execution logic of a method for processing a base table and a global secondary index of the base table according to an embodiment of this application;
FIG. 6 is a diagram of execution logic of a method for processing a base table and a global secondary index of the base table according to an embodiment of this application;
FIG. 7 is a diagram of execution logic of a method for processing a base table and a global secondary index of the base table according to an embodiment of this application;
FIG. 8 is a flowchart of a method for processing a base table and a global secondary index of the base table according to an embodiment of this application;
FIG. 9 is a diagram of execution logic of a method for processing a base table and a global secondary index of the base table according to an embodiment of this application;
FIG. 10 is a diagram of execution logic of a method for processing a base table and a global secondary index of the base table according to an embodiment of this application;
FIG. 11 is a diagram of a method for processing a base table and a global secondary index of the base table in a distributed database according to an embodiment of this application;
FIG. 12 is a diagram of data distribution in a distributed database according to an embodiment of this application;
FIG. 13 is a diagram of execution logic of a method for processing a base table and a global secondary index of the base table according to an embodiment of this application;
FIG. 14 is a diagram of execution logic of a method for processing a base table and a global secondary index of the base table according to an embodiment of this application;
FIG. 15 is a diagram of execution logic of a method for processing a base table and a global secondary index of the base table according to an embodiment of this application;
FIG. 16 is a diagram of execution logic of a method for processing a base table and a global secondary index of the base table according to an embodiment of this application;
FIG. 17 is a diagram of execution logic of a method for processing a base table and a global secondary index of the base table according to an embodiment of this application;
FIG. 18 is a diagram of a data processing apparatus according to an embodiment of this application; and
FIG. 19 is a diagram of a structure of a data processing apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in the descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, descriptions about concepts related to this application are provided as examples for reference.
(1) A distributed database is a logically unified database formed by connecting a plurality of physically dispersed database units by using a computer network. Each connected database unit may be referred to as a site, a node, a data node (data node, DN), or the like. Distributed storage is a data storage technology that stores data in a plurality of independent data units.
(2) A key-value database (key-value database), or referred to as key-value storage, is a data storage paradigm used to store, retrieve, and manage an associative array. The associative array is a data structure that is referred to as a dictionary or a hash table in most cases. The dictionary includes a collection of objects or records, the records include a plurality of different fields (or referred to as fields), and each field includes data. The key-value database may store data as a key-value pair set. A key is used as a unique identifier and may be used to identify the data. The key may also be referred to as a field, an attribute, or the like.
(3) A base table (base table), namely, a table, is an object used to store data in a database, and is a set of structured data. The base table may be defined as a set of at least one attribute (or referred to as a column/key). One attribute is one column of data in the base table. Therefore, the base table may also be understood as a set of at least one column of data.
(4) A primary key (primary key) is a combination of one or more columns of data in a base table, and a value of the primary key can uniquely identify each row in the base table. Such one or more columns of data are referred to as a primary key of the base table, and entity integrity of the base table may be enforced by using the primary key. When a base table is created or modified, a primary key may be created by defining a primary key constraint. A base table can have only one primary key constraint, and column data in the primary key constraint cannot be null.
(5) A distribution key (distribution key) is a combination of one or more columns of data used to determine a database unit that stores a specific data row in a distributed database. A database unit in which a data row in a base table is stored can be determined based on the distribution key.
(6) A global secondary index (global secondary index, GSI), also referred to as a global index, is a type of index. The index is a data structure for sorting in a database system, and is used to assist in quickly querying and updating data in a base table of the database. The global secondary index is a global index that takes effect on a data node in the distributed database.
(7) A coordinator node (coordinator node, CN) is a node that performs data scheduling. The coordinator node may manage a data node that establishes a communication connection to the coordinator node, and perform data scheduling between data nodes.

A data node is a node configured to process and store data. The data node may be a node that receives data scheduling information of the coordinator node, and receives and sends data or performs data processing and storage based on the received data scheduling information.

A device form of the coordinator node or the data node provided in embodiments of this application may be an electronic device, or may be a functional module or unit disposed in the electronic device, or may be a chip, an integrated circuit, a component, or the like deployed in the electronic device.

For example, the electronic device may be a terminal device, and the terminal device may also be referred to as user equipment (user equipment, UE), a mobile terminal (mobile terminal, MT), or the like. The terminal device includes but is not limited to a mobile phone (Mobile Phone), a tablet computer, a notebook computer, a palmtop computer, a mobile internet device (Mobile Internet Device, MID), a wearable device (for example, a smartwatch or a smart band), a vehicle, a vehicle-mounted device (for example, the vehicle-mounted device on an automobile, an electric vehicle, an airplane, a ship, a train, or a high-speed railway), a virtual reality (Virtual Reality, VR) device, an augmented reality (Augmented Reality, AR) device, or a wireless terminal in industrial control (Industrial Control), a smart home device (for example, a refrigerator, a television, an air conditioner, or an electricity meter), an intelligent robot, a workshop device, a wireless terminal in self driving (Self Driving), a wireless terminal in remote medical surgery (Remote Medical Surgery), a wireless terminal in a smart grid (Smart Grid), a wireless terminal in transportation safety (Transportation Safety), a wireless terminal in a smart city (Smart City), a wireless terminal in a smart home (Smart Home), or a flight device (for example, an intelligent robot, a hot air balloon, an unmanned aerial vehicle, or an aircraft). For example, the terminal device in embodiments of this application includes but is not limited to iOS^{®}, Android^{®}, Microsoft^{®}, or another operating system.

It should be understood that in embodiments of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b and c, where a, b, and c may be singular or plural.

In a distributed database, currently, a base table and a global secondary index of the base table are generally updated in an asynchronous update manner, to ensure data consistency between the base table and the global secondary index of the base table. However, this method can only ensure final data consistency between the base table and the global secondary index of the base table, and can hardly maintain high data consistency between the base table and the global secondary index of the base table, and this method does not support table access by index row query. Therefore, data query performance is low. In addition, currently, it is generally required that the global secondary index of the base table needs to include data like a primary key and a distribution key of the base table. This causes index bloat. After the global secondary index is created, a large amount of data needs to be maintained. Consequently, performance of data query performed by using the global secondary index is poor.

In view of this, embodiments of this application provide a method and an apparatus for processing a base table and a global secondary index of the base table in a distributed database, to improve data consistency between the base

table and the global secondary index of the base table, improve accuracy of global secondary index data, and improve accuracy of the base table and the global secondary index of the base table during use. In addition, this solution can further reduce index bloat of the global secondary index, and improve performance of data query performed by using the global secondary index.

The solutions provided in embodiments of this application may be applied to a scenario in which the base table and the global secondary index of the base table in the distributed database are processed. In embodiments of this application, the base table includes at least one column of data, and the at least one column of data may be divided into at least one row of data. In other words, the base table includes the at least one row of data × the at least one column of data. In some embodiments of this application, data in a same column in the base table belongs to a same attribute, and data in a same row in the base table belongs to a same tuple, and may be stored in a same storage location. The at least one column of data in the base table is a distribution key of the base table, and the distribution key of the base table is used to determine a storage location of the data in the base table. Optionally, the base table may further include at least one column of data used as a primary key. The distribution key and the primary key of the base table may be the same or different. The distribution key and the primary key of the base table may be data in a specified column in the base table, or may be data determined based on a user indication.

In embodiments of this application, the global secondary index of the base table includes data in some columns in the base table and location information corresponding to the data in the base table, the data in the some columns may be selected by a user from column data in the base table and is set, and the location information corresponding to the data indicates a location of the corresponding data in the base table. Optionally, the global secondary index of the base table may further include version information (or referred to as transaction information) corresponding to the data in the base table, and the version information corresponding to the data is used to determine whether the corresponding data is valid. In some embodiments of this application, data in a same column in the global secondary index belongs to a same attribute, and data in a same row in the global secondary index belongs to a same tuple, and may be stored in a same location. At least one column of data in the global secondary index is a distribution key of the global secondary index, and the distribution key of the global secondary index is used to determine a storage location of the data in the global secondary index. In some embodiments of this application, the global secondary index includes an index key, an additional key (which may also be referred to as an additional column/a hidden column/a covered column/an included column), and the like. The index key is at least one column of data in the global secondary index, and may be used to query specific data, to increase a query speed. Optionally, the hidden column includes at least one column of data that is in the global secondary index and that is invisible to the user, and when the user indicates to display the global secondary index, data in the global secondary index displayed to the user does not include the data in the hidden column of the global secondary index. The distribution key and the index key of the global secondary index may be the same or different. The distribution key and the index key of the global secondary index may be data in a specified column, or may be data determined based on a user indication.

In the solutions provided in embodiments of this application, the user can perform an insert/update/delete (insert/update/delete, IUD) operation on the data in the base table, to update the base table, and can correspondingly update the global secondary index of the base table synchronously, to ensure high consistency between base table data and global secondary index data. The user can also query the data in the base table by using the global secondary index and the base table, to view and use the base table data.

The solutions provided in embodiments of this application may be applied to a distributed database system including at least one coordinator node and at least one data node. The data node is configured to store base table data and/or global secondary index data, and the coordinator node is configured to perform management, an operation, and scheduling processing on the base table data.

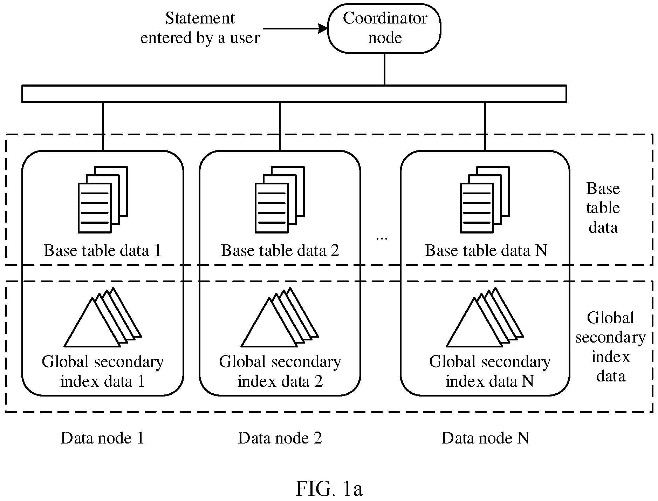

For example, the system includes one coordinator node and a plurality of data nodes. As shown in FIG. 1a, data included in the base table and data included in the global secondary index may be stored in the plurality of data nodes, for example, data nodes 1 to N shown in FIG. 1a, in a distributed manner, where N is a positive integer. Base table data 1 to N shown in FIG. 1a forms base table data, and global secondary index data 1 to N shown in FIG. 1a forms global secondary index data of the base table.

In the distributed database system, a communication connection is established between each coordinator node and at least one data node, and scheduling processing may be performed, based on a user indication, on the base table data and the global secondary index data that are stored in the data node. Specifically, the coordinator node may receive a statement that is entered by the user and that indicates to create/update/query the base table, parse the statement entered by the user, determine an operation that needs to be performed on the base table, and indicate a corresponding data node to perform the corresponding operation. Updating the base table may be performing an insert/update/delete operation and the like on the data included in the base table.

If the statement entered by the user is a creation statement, the coordinator node may store, in the at least one data node in a distributed manner, data of the base table created by the user. The coordinator node may further create the global secondary index of the base table based on a user indication, and store data of the global secondary index of the base table in the at least one data node in a distributed manner. The global secondary index of the base table may include information like an index key, a distribution key, and an additional key. The global secondary index of the base table may implicitly include distribution key information of the base table (in other words, the global secondary index does not include original content of the distribution key of the base table, but includes content obtained after the distribution key of the base table is processed), location information corresponding to the data in the base table, and the like, and the information may be additional key data in the global secondary index. If the statement entered by the user is an update statement, the coordinator node first updates the base table (data) on the data node. After updating the base table, the data node sends the data in the base table, location information corresponding to the data, and the like back to the coordinator node. The coordinator node sends, to a corresponding data node based on the distribution key of the global secondary index, the index key, the distribution key, the additional key, the location information, and the like of the global secondary index that need to be updated, so that the corresponding data node updates the global secondary index accordingly. If the statement entered by the user is a query statement, the coordinator node determines whether the global secondary index is established in the base table. If the global secondary index is established, the global secondary index may be used for query. If not all values that need to be queried can be obtained when the global secondary index is used for query, the base table may be used for query. If no global secondary index is established in the base table, the base table may be directly used for query.

In some embodiments of this application, distributed storage of the base table and distributed storage of the global secondary index are independent of each other. The coordinator node may store the base table data in the at least one data node in a distributed manner based on a distribution manner (for example, hash (hash) distribution or range (range) distribution) corresponding to the base table. The coordinator node may store the global secondary index data in the at least one data node in a distributed manner based on a distribution manner (for example, hash distribution or range distribution) corresponding to the global secondary index. A same data node may store only the base table data or the global secondary index data, or may store both the base table data and the global secondary index data.

For example, the coordinator node may store the base table data in the plurality of data nodes in a distributed manner according to a distribution algorithm based on the distribution key of the base table. For the global secondary index of the base table, the coordinator node may store, in a distribution manner that is the same as or different from that of the base table, the global secondary index data in the plurality of data nodes according to a distribution algorithm based on the distribution key of the global secondary index.

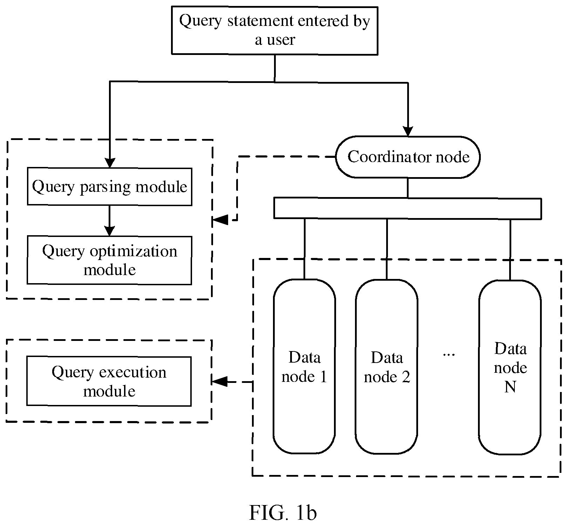

For example, as shown in FIG. 1b, a query scenario is used as an example. The coordinator node may include a query parsing module and a query optimization module, and the data node may include a query execution module. The user may enter, on the coordinator node, a query statement indicating to query data, and view returned data on the coordinator node. The query parsing module in the coordinator node may parse the query statement entered by the user, the query optimization module in the coordinator node may optimize a parsing result of the query parsing module, and send a query instruction to the query execution module in the data node, and the query parsing module in the data node may finally perform the data query.

For example, the function of the query parsing module may be implemented by a parser deployed in the coordinator node, the function of the query optimization module may be implemented by an optimizer deployed in the coordinator node, and the function of the query execution module may be implemented by an executor deployed in the data node. Certainly, the functions of the foregoing modules may alternatively be implemented by using another hardware apparatus. This is not specifically limited in embodiments of this application.

In embodiments of this application, the data nodes store different data, but have architectures that are the same, and support various different data distribution manners. The coordinator node may be selected according to an election algorithm, or may have an architecture different from that of the data node. Based on a specific deployment situation of the distributed database system, there may be a plurality of coordinator nodes. Modules of the database may be equally deployed on the coordinator node and the data nodes, and a role of a node in the distributed database system is set by using a configuration file.

It should be understood that the system architecture shown in FIG. 1a or FIG. 1b is merely an example for describing a system architecture to which the solutions of this application are applicable, and does not constitute a limitation on the system architecture to which the solutions of this application are applicable.

The following describes the solutions provided in embodiments of this application with reference to specific embodiments.

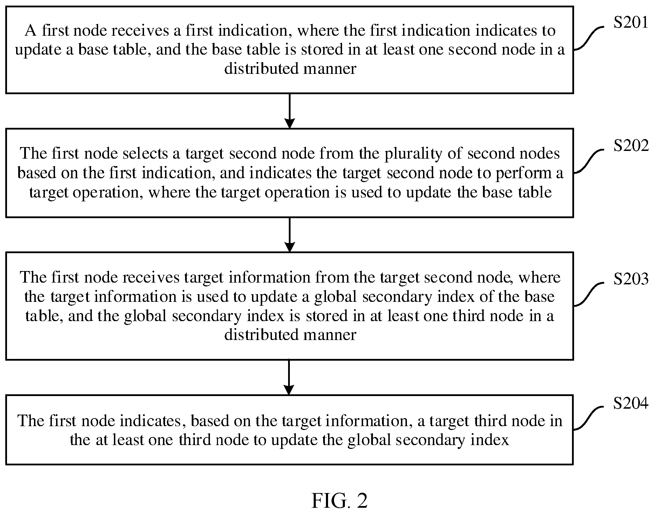

Refer to FIG. 2. A method for processing a base table and a global secondary index of the base table in a distributed database according to an embodiment of this application may include the following steps.

S201: A first node receives a first indication, where the first indication indicates to update a base table, and the base table is stored in at least one second node in a distributed manner.

In this embodiment of this application, the base table may include one or more attributes. The base table may have at least one global secondary index. The global secondary index of the base table may include at least one attribute in the base table, the at least one attribute is included in the one or more attributes, and data included in the global secondary index of the base table is stored in at least one third node in a distributed manner. The global secondary index in this embodiment of this application may be any one of the at least one global secondary index of the base table. Alternatively, the global secondary index in this embodiment of this application may be each of the at least one global secondary index of the base table.

In some embodiments of this application, the first node may be the coordinator node in the foregoing distributed database system, and the second node and the third node may be the data nodes in the foregoing distributed database system. The at least one third node may be the same as or different from the at least one second node, or there may be some same nodes in the at least one third node and the at least one second node. For example, the first node may be the coordinator node shown in FIG. 1a, and the at least one second node and the at least one third node may be the at least one data node shown in FIG. 1a.

In some embodiments of this application, each attribute in the base table is a column of data in the base table, and data (namely, at least one attribute/at least one column of data) in the base table may be stored in a plurality of second nodes in a distributed manner based on a row distribution status (namely, a tuple distribution status). Data in a same row in the base table may be stored in a same node, and each of the at least one second node stores at least one row of data (namely, at least one tuple) in the base table.

For example, data in the base table is enrollment data in an enrollment system of a school. A name of the base table may be a base table 1 (table1), and the base table may include data shown in Table 1 below.

**Table 1 Data in the base table 1**

| Student ID (studentid) | Enrollment document ID (docid) | Student name (name) | Class ID (classid) |
|---|---|---|---|
| 1 | D100101 | A | 11 |
| 2 | D100132 | B | 12 |
| 3 | D100177 | C | 13 |
| 4 | D100189 | D | 13 |
| ... | ... | ... | ... |

The base table 1 shown in Table 1 may include four columns × n rows of data (n is a positive integer). The four columns of data respectively belong to four attributes: the student ID, the enrollment document ID, the student name, and the class ID, and each row of data corresponds to enrollment information of a student. In this case, when the base table is the base table 1, attributes included in the base table are the four attributes: the student ID, the enrollment document ID, the student name, and the class ID that are shown in Table 1. Table definition information (or table attribute information) of the base table 1 shown in Table 1 is shown in Table 2 below.

**Table 2 Base table definition information**

| Table name | Base table 1 (table1) | | |
|---|---|---|---|
| Attribute column # | Column name | Data type | Remark |
| 1 | studentid | Integer (integer) | Student ID, distribution key, primary key column 1 |
| 2 | docid | Character (char(10)) | Enrollment document ID, primary key column 2 |
| 3 | name | Variable-length character (varchar(50)) | Student name |
| 4 | classid | Integer/integral number (integer) | Class ID |
| Distribution key | hash (studentid) | | |
| Primary key | (studentid, docid) | | |

It may be determined based on the foregoing Table 2 that a name of the base table is the base table 1, and the base table includes four attributes, specifically, four columns of data: the student ID, the enrollment document ID, the student name, and the class ID. The two attributes, namely, the student ID and the enrollment document ID, are primary keys of the base table 1. The attribute, namely, the student ID, is a distribution key of the base table 1, and data in the base table 1 is distributed and stored in a plurality of second nodes in a hash distribution manner. Data in the attribute, namely, the student ID, is integer type data, data in the attribute, namely, the enrollment document ID, is character type data, data in the attribute, namely, the student name, is variable-length character type data, and data in the attribute, namely, the class ID, is integer/integral data. The information indicated in Table 2 may be stored in the first node and the at least one second node as metadata of the base table 1. Certainly, the metadata of the base table 1 is not limited to including the information indicated in Table 2, and may alternatively include more or less information than that in Table 2.

In some embodiments of this application, the base table may have at least one global secondary index, and each global secondary index may include a part of attributes in the base table. Data in the global secondary index may be stored in a plurality of third nodes in a distributed manner based on a row distribution status. Data in a same row in the global secondary index may be stored in a same node, and each of the at least one third node stores at least one row of data (at least one tuple) in the global secondary index.

In some embodiments of this application, the global secondary index of the base table further includes location information, and the location information indicates a location, in the base table, of a tuple to which data in at least one attribute belongs. The at least one attribute is an attribute that is included in the global secondary index and that belongs to the base table. In the global secondary index, location information corresponding to each piece of data may include first location information and second location information. The first location information indicates a node in which a tuple to which the corresponding data belongs is located, and the second location information indicates a storage location, in the node, of the tuple to which the corresponding data belongs. The tuple to which the data belongs may be a tuple to which the data belongs in the base table. Specifically, the global secondary index of the base table may include at least one piece of location information. In the at least one piece of location information, each piece of location information may correspond to one tuple in the base table, and each piece of location information indicates a location of the corresponding tuple in the base table, namely, a storage location of the tuple.

In some embodiments of this application, the global secondary index of the base table further includes version information, the version information indicates a version of the tuple to which the data in the at least one attribute belongs, and a version of each tuple is used to determine whether the corresponding tuple is valid. The at least one attribute is an attribute that is included in the global secondary index and that belongs to the base table. Specifically, the global secondary index of the base table may include at least one piece of version information. Each piece of version information corresponds to one tuple in the base table, each piece of version information indicates a version of the corresponding tuple, and the version of each tuple is used to determine whether data in the corresponding tuple is valid. When querying base table data, the first node may determine, based on the version information, whether corresponding tuple data in the base table is valid, to determine valid data included in the base table, and further obtain, from the valid data, data that needs to be queried. This ensures query accuracy.

Optionally, the location information and the version information that are included in the global secondary index may be used as data of an additional key in the global secondary index.

For example, the global secondary index of the base table 1 may include class_stu_gsi and/or name_doc_gsi, where class_stu_gsi and name_doc_gsi are names of the global secondary index.

Global secondary index definition information (or attribute information) of class_stu_gsi is shown in Table 3 below.

**Table 3 Global secondary index definition information of class_stu_gsi**

| Index name | class _stu_gsi | | |
|---|---|---|---|
| Attribute column # | Column name | Type | Remark |
| 1 | classid | integer | Class ID, distribution key, index key |
| 2 | studentid | char(10) | Student ID |
| 3 | name | varchar(50) | Student name |
| Distribution key | hash (classid) | | |
| Index | (classid) | | |
| Additional key | (Location information, version information) | | |

As shown in Table 3, the global secondary index class_stu_gsi includes three attributes in the base table 1: the class ID, the student ID, and the student name. The attribute the class ID is an index key and a distribution key of the global secondary index class_stu_gsi, and data in the global secondary index class_stu_gsi is distributed and stored in the plurality of third nodes in the hash distribution manner. As shown in Table 3, the global secondary index class_stu_gsi may further include the location information and the version information that correspond to the data in the base table, and the location information and the version information are additional keys of the global secondary index class_stu_gsi. The information indicated in Table 3 may be stored in the first node and the at least one third node as metadata of the global secondary index class_stu_gsi. Certainly, the metadata of the global secondary index is not limited to including the information indicated in Table 3, and may alternatively include more or less information than that in Table 3. In this embodiment of this application, when the global secondary index of the base table 1 is class_stu_gsi, the attribute in the global secondary index includes the class ID, the student ID, and the student name.

Global secondary index definition information (or attribute information) of name_doc_gsi is shown in Table 4 below.

**Table 4 Global secondary index definition information of name_doc_gsi**

| Index name | name_doc_gsi | | |
|---|---|---|---|
| Attribute column # | Column name | Type | Remark |
| 1 | name | varchar(50) | Student name, distribution key, index key |
| 2 | docid | char(10) | Enrollment document ID, additional key |
| Distribution key | hash (name) | | |
| Index | (name, docid) | | |
| Additional key | (Enrollment document ID, location information, version information) | | |

As shown in Table 4, the global secondary index name_doc_gsi includes two attributes in the base table 1: the student name and the enrollment document ID. The two attributes the student name and the enrollment document ID are index keys of the global secondary index name_doc_gsi. The attribute the student name is a distribution key of the global secondary index name_doc_gsi, and data in the global secondary index name_doc_gsi is distributed and stored in the plurality of third nodes in the hash distribution manner. The data in a column of the enrollment document ID is an additional key of the global secondary index name_doc_gsi. As shown in Table 4, the global secondary index name_doc_gsi may further include the location information and the version information that correspond to the data in the base table, and the location information and the version information are additional keys of the global secondary index name_doc_gsi. The information indicated in Table 4 may be stored in the first node and the at least one third node as metadata of the global secondary index name_doc_gsi. Certainly, the metadata of the global secondary index is not limited to including the information indicated in Table 4, and may alternatively include more or less information than that in Table 4. In this embodiment of this application, when the global secondary index is name_doc_gsi, the attribute in the global secondary index includes the student name and the enrollment document ID.

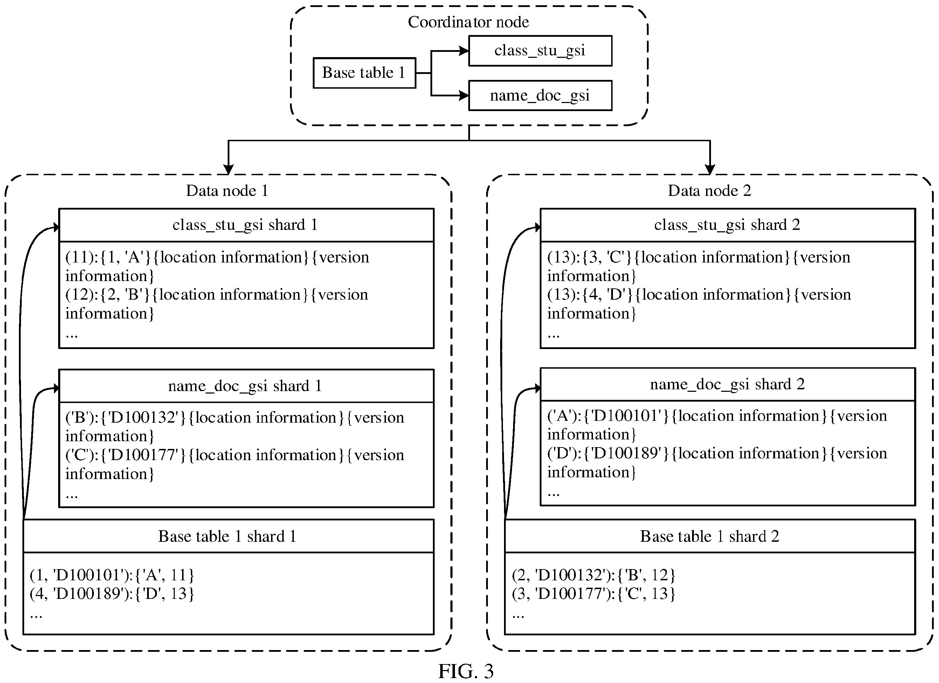

For example, the at least one second node and the at least one third node are the same and both include a data node 1 and a data node 2. As shown in FIG. 3, data of the base table 1, data of the global secondary index class_stu_gsi, and data of the global secondary index name_doc_gsi are all stored in the data node 1 and the data node 2 in a distributed manner. Data in the base table 1 stored in the data node 1 includes a first row of data ((1, 'D100101'):{'A', 11}), a fourth row of data ((4, 'D100189'):{'D', 13}), and the like. Data in the base table 1 stored in the data node 2 includes a second row of data ((2, 'D100132'):{'B', 12}), a third row of data ((3, 'D100177'):{'C', 13}), and the like. Data in the global secondary index class_stu_gsi stored in the data node 1 includes (11):{1, 'A'} and corresponding location information and version information, (12):{2, 'B'} and corresponding location information and version information, and the like. Data in the global secondary index class_stu_gsi stored in the data node 2 includes (13):{3, 'C'} and corresponding location information and version information, (13):{4, 'D'} and corresponding location information and version information, and the like. Data in the global secondary index name_doc_gsi stored in the data node 1 includes ('B'):{'D100132'} and corresponding location information and version information, ('C'):{'D100177'} and corresponding location information and version information, and the like. Data in the global secondary index name_doc_gsi stored in the data node 2 includes ('A'):{'D100101'} and corresponding location information and version information, ('D'):{'D100189'} and corresponding location information and version information, and the like. The first node stores metadata of the base table 1, metadata of the global secondary index class_stu_gsi, and metadata of the global secondary index name_doc_gsi. The metadata of the base table indicates information like the base table definition information of the base table, and the metadata of the global secondary index indicates the global secondary index definition information of the global secondary index and the like.

It should be noted that the foregoing example is merely an example for describing a scenario and an implementation to which the method provided in embodiments of this application is applicable, and does not constitute a limitation on an application scenario and an implementation of the method provided in embodiments of this application.

In some embodiments of this application, the first indication specifically indicates to add (or insert) first data to the base table, or update second data included in the base table to third data, or delete fourth data included in the base table. In other words, the first indication specifically indicates to perform an IUD operation on the base table. Optionally, the first data/the third data may be one or more rows of data to be inserted into the base table, and the second data/the fourth data may be one or more rows of data in the base table.

S202: The first node selects a target second node from the plurality of second nodes based on the first indication, and indicates the target second node to perform a target operation, where the target operation is used to update the base table.

When an operation specifically indicated by the first indication to be performed on the base table varies, the target second node and the target operation performed by the target second node also vary. The following provides descriptions with reference to specific scenarios.

### 1. Data adding scenario

In some embodiments of this application, when the first indication specifically indicates to add the first data to the base table, the target second node is a node that is in the plurality of second nodes and that is configured to store the first data. The first node may calculate, according to a distribution algorithm corresponding to the distribution manner of the data in the base table, data that is in the first data and that is used as the distribution key of the base table, and determine, based on a calculation result, the target second node configured to store the first data. After determining the target second node configured to store the first data, the first node may indicate the target second node to perform the target operation. The target operation is specifically to insert the first data into the base table. After receiving the indication, the target second node inserts the first data into the base table for storage, and may further generate and store location information and version information that correspond to the first data.

Example 1: When the base table is the foregoing base table 1, the first data may be enrollment information of a new student. For example, the first data may include a student ID 368, an enrollment document ID D106194, a student name E, and a class ID 11. Because the distribution key of the base table 1 is the student ID attribute, data used as the distribution key of the base table after the first data is inserted into the base table is the student ID 368. Because the data in the base table 1 is distributed in the plurality of second nodes in the hash distribution manner, the first node may perform, according to a hash distribution algorithm, a hash operation on the student ID 368 included in the first data, and determine, based on an operation result, a corresponding target second node configured to store the first data. For example, if the target second node is the data node 1 shown in FIG. 3, the first node may indicate the data node 1 to add the first data to the base table 1 for storage. After receiving the indication, the data node 1 stores the first data as data in the base table 1, and generates information like the location information and the version information that correspond to the first data. The location information corresponding to the first data includes first location information and second location information that correspond to the first data. The first location information indicates a node in which the first data is located, namely, the data node 1, and the second location information indicates a specific storage location of the first data in the data node 1.

### 2. Data update scenario

In some embodiments of this application, when the first indication specifically indicates to update the second data included in the base table to the third data, the target second node is a node that is in the plurality of second nodes and that is configured to store the second data (and the third data). The first node may perform calculation based on data that is in the second data and that is used as the distribution key of the base table, and determine, based on a calculation result, the target second node configured to store the second data. After determining the target second node configured to store the second data, the first node may indicate the target second node to perform the target operation. The target operation is to update the second data to the third data. After receiving the indication, the target second node updates the stored second data to the third data, and may further generate location information and version information that correspond to the third data, and update location information and version information that correspond to the second data to the location information and the version information that correspond to the third data, or return the location information and the version information that correspond to the third data to the first node.

Optionally, when there is no intersection between the attribute to which the second data belongs and the attribute of the global secondary index of the base table, even if the base table is updated, data consistency between the global secondary index and the base table is not affected. Therefore, in this case, after indicating the target second node to perform the target operation, the first node may not perform synchronous update processing on the global secondary index. When there is no intersection between the attribute to which the second data belongs and attributes of all the global secondary indexes in the base table, the first node may end a current procedure after indicating the target second node to perform the target operation, and does not need to perform a subsequent step of updating the global secondary index.

When there is an intersection between the attribute to which the second data belongs and attributes of any one or more global secondary indexes in the base table, the first node may perform, based on the method in this embodiment of this application, a step of synchronously updating the base table and the one or more global secondary indexes. To be specific, before the first node receives target information from the target second node, if the first node determines that the first indication specifically indicates to update a part of data included in the base table, the first node may first determine that there is an intersection between an attribute to which the part of data belongs and the attribute in the global secondary index of the base table. After determining that there is the intersection, the first node continues to perform the step of receiving the target information from the target second node and a subsequent step.

Example 2: When the base table is the foregoing base table 1, the second data may be a part or all of enrollment information of a student in the base table 1, and the third data may be a part or all of updated enrollment information corresponding to the student. For example, the second data may include a student ID 3, an enrollment document ID D100177, a student name C, and a class ID 13. The third data may include a student ID 3, an enrollment document ID D100777, a student name C, and a class ID 13. Because the distribution key of the base table 1 is the student ID attribute, data that is in the second data and that is used as the distribution key of the base table is the student ID 3. Because the data in the base table 1 is distributed in the plurality of second nodes in a hash distribution manner, the first node may perform, according to a hash distribution algorithm, a hash operation on the student ID 3 included in the first data, and determine, based on an operation result, a corresponding target second node configured to store the first data, for example, the data node 2 shown in FIG. 3. In this case, the first node may indicate the data node 2 to update the second data to the third data. After receiving the indication, the data node 2 updates the second data to the third data, uses the location information corresponding to the second data as the location information corresponding to the third data, and generates information like the version information corresponding to the third data.

### 3. Data deletion scenario

In some embodiments of this application, when the first indication specifically indicates to delete the fourth data included in the base table, the target second node is a node that is in the plurality of second nodes and that is configured to store the fourth data. The first node may calculate, according to a distribution algorithm corresponding to the distribution manner of the data in the base table, data that is in the fourth data and that is used as the distribution key of the base table, and determine, based on a calculation result, the target second node configured to store the fourth data. After determining the target second node configured to store the fourth data, the first node may indicate the target second node to perform the target operation. The target operation is specifically to delete the fourth data from the base table. After receiving the indication, the target second node may delete the stored fourth data and location information of the fourth data from the base table. Optionally, the target second node may alternatively delete the fourth data after returning the target information to the first node.

In some embodiments of this application, when the global secondary index of the base table includes the version information, a specific operation performed when the first node deletes the stored fourth data from the base table is as follows: The first node updates the version information corresponding to the fourth data, so that updated version information indicates that the fourth data is invalid data. In a subsequent process, the first node may delete the fourth data and the location information and the version information of the fourth data from a node in which the fourth data is located in a unified deletion manner.

Example 3: When the base table is the foregoing base table 1, the fourth data may be enrollment information of a student in the base table 1. For example, the fourth data may include a student ID 2, an enrollment document ID D100132, a student name B, and a class ID 12. Because the distribution key of the base table 1 is the student ID attribute, data that is in the fourth data and that is used as the distribution key of the base table is the student ID 2. Because the data in the base table 1 is distributed in the plurality of second nodes in a hash distribution manner, the first node may perform, according to a hash distribution algorithm, a hash operation on the student ID 2 included in the fourth data, and determine, based on an operation result, a corresponding target second node configured to store the first data, for example, the data node 1 shown in FIG. 3. In this case, the first node may indicate the data node 1 to delete the fourth data from the base table. After receiving the indication, the data node 1 may perform a corresponding data deletion operation based on the indication.

S203: The first node receives target information from the target second node, where the target information is used to update the global secondary index of the base table, and the global secondary index is stored in at least one third node in a distributed manner.

In some embodiments of this application, after performing the target operation based on the indication of the first node, the target second node may return, to the first node, the target information used to update the global secondary index of the base table, so that the first node controls a node that stores the global secondary index to correspondingly update the global secondary index.

In an optional implementation, the target information includes at least first target data and location information corresponding to changed data. In another optional implementation, the target information includes at least first target data, target distribution key data, and second location information corresponding to changed data. In the foregoing two implementations, the first target data is data that belongs to the at least one attribute and that is included in the changed data, and the at least one attribute is an attribute that belongs to the base table and that is included in the global secondary index. The changed data is data in which there is a difference between first base table data and second base table data, the first base table data is data included in the base table before the base table is updated, and the second base table data is data included in the base table after the base table is updated. The target distribution key data is data that is included in the changed data and that is used as a distribution key of the base table, namely, data that is included in the changed data and that belongs to the distribution key of the base table. The target distribution key data is used to determine first location information corresponding to the changed data. The first node may perform corresponding calculation on the target distribution key data according to a distribution algorithm corresponding to a distribution manner in the base table, to obtain the first location information corresponding to the changed data to which the target distribution key data belongs.

It should be understood that the first target data is a part or all of the changed data. Therefore, it may be considered that the location information corresponding to the changed data may alternatively be location information corresponding to the first target data, the first location information corresponding to the changed data may alternatively be first location information corresponding to the first target data, and the second location information corresponding to the changed data may alternatively be second location information corresponding to the first target data.

In different scenarios, specific information included in the target information is different. The following provides specific descriptions.

### 1. Data adding scenario

When the first indication specifically indicates to add the first data to the base table, the first base table data is data included in the base table before the first data is added, and the second base table data is data included in the base table after the first data is added. In this case, the changed data is the first data, and the first target data is data that is included in the first data and that belongs to the at least one attribute, where the at least one attribute is an attribute that is included in the global secondary index and that belongs to the base table. The target distribution key data is data that is in the first data and that is used as the distribution key of the base table after the first data is inserted into the base table, namely, data that is included in the first data and that belongs to the distribution key of the base table.

Example 4: In the foregoing examples, when the base table 1 has only one global secondary index class_stu_gsi, in the scenario described in the foregoing example 1, the changed data includes a student ID 368, an enrollment document ID D106194, a student name E, and a class ID 11. The first target data includes the class ID 11, the student ID 368, and the student name E. The target distribution key data is the student ID 368.

Example 5: In the foregoing examples, when the base table 1 has two global secondary indexes: class_stu_gsi and name_doc_gsi, in the scenario described in the foregoing example 1, the changed data includes a student ID 368, an enrollment document ID D106194, a student name E, and a class ID 11. The first target data includes the class ID 11, the student ID 368, the student name E, and the enrollment document ID D106194. The target distribution key data is the student ID 368.

### 2. Data update scenario

When the first indication specifically indicates to update the second data included in the base table to the third data, the first base table data is data included in the base table before the second data is updated to the third data, and the second base table data is data included in the base table after the second data is updated to the third data. In this case, the changed data includes the second data and the third data, and the first target data includes data that belongs to the at least one attribute and that is included in the second data and data that belongs to the at least one attribute and that is included in the third data, where the at least one attribute is an attribute that belongs to the base table and that is included in the global secondary index. In this case, the target distribution key data includes data that is in the second data and the third data and that is used as the distribution key of the base table (namely, data that is included in the second data and the third data and that belongs to the distribution key of the base table). In some embodiments of this application, the first target data may alternatively include data that belongs to the at least one attribute and that is included in data stored in a same storage location as the second data and data that belongs to the at least one attribute and that is included in the third data.

Example 6: In the foregoing examples, when the base table 1 has only one global secondary index class_stu_gsi, in the scenario described in the foregoing example 2, the changed data includes pre-update data, namely, the student ID 3, the enrollment document ID D100177, the student name C, and the class ID 13; and post-update data, namely, the student ID 3, the enrollment document ID D100777, the student name C, and the class ID 13. The first target data includes the class ID 13, the student ID 3, and the student name C. The target distribution key data is the student ID 3.

Example 7: In the foregoing examples, when the base table 1 has two global secondary indexes class_stu_gsi and name_doc_gsi, in the scenario described in the foregoing example 2, the changed data includes pre-update data, namely, the student ID 3, the enrollment document ID D100177, the student name C, and the class ID 13; and post-update data, namely, the student ID 3, the enrollment document ID D100777, the student name C, and the class ID 13. The first target data includes the class ID 13, the student ID 3, the student name C, and the enrollment document ID D100177, and the class ID 13, the student ID 3, the student name C, and the enrollment document ID D100777. The target distribution key data is the student ID 3.

### 3. Data deletion scenario

When the first indication specifically indicates to delete the fourth data included in the base table, the first base table data is data included in the base table before the fourth data is deleted, and the second base table data is data included in the base table after the fourth data is deleted. In this case, the changed data is the fourth data, and the first target data is data that belongs to the at least one attribute and that is included in the fourth data, where the at least one attribute is an attribute that belongs to the base table and that is included in the global secondary index. The target distribution key data is data that is in the fourth data and that is used as the distribution key of the base table.

Example 8: In the foregoing examples, when the base table 1 has only one global secondary index class_stu_gsi, in the scenario described in the foregoing example 2, the changed data includes the student ID 2, the enrollment document ID D100132, the student name B, and the class ID 12. The first target data includes the class ID 12, the student ID 2, and the student name B. The target distribution key data is the student ID 2.

Example 9: In the foregoing examples, when the base table 1 has two global secondary indexes class_stu_gsi and name_doc_gsi, in the scenario described in the foregoing example 2, the changed data includes the student ID 2, the enrollment document ID D100132, the student name B, and a class ID 12, and the first target data includes the class ID 12, the student ID 2, the student name B, and the enrollment document ID D100132. The target distribution key data is the student ID 2.

S204: The first node indicates, based on the target information, a target third node in the at least one third node to update the global secondary index.

In some embodiments of this application, in an optional implementation, when indicating, based on the target information, the at least one third node to update the global secondary index, the first node may directly send the target information from the target second node to the target third node, and indicate the target third node to update, based on the target information, the data that is in the global secondary index and that is stored on the target third node. The target third node is each of the plurality of third nodes; or the target third node is a node that is in the at least one third node and that is configured to store the first target data.

In some embodiments of this application, in another optional implementation, when the target information includes the first target data, the target distribution key data, and the second location information corresponding to the changed data, the first node may determine the first location information corresponding to the changed data based on the target distribution key data when indicating, based on the target information, the at least one third node to update the global secondary index, then send update information to the target third node, and indicate the target third node to update, based on the update information, the data that is in the global secondary index and that is stored in the target third node. The update information includes the first location information corresponding to the changed data and information other than the target distribution key data in the target information. The target third node is each of the plurality of third nodes, or the target third node is a node that is in the at least one third node and that is configured to store the first target data.

In the foregoing two implementations, when the target third node is each of the at least one third node, after receiving the target information, the target third node may calculate, according to a distribution algorithm (for example, a hash algorithm) corresponding to a distribution manner of the global secondary index, data that is in the first target data in the target information and whose attribute is the same as an attribute of the distribution key of the global secondary index, and determine, based on a calculation result, a node configured to store the first target data. If the determined node is the target third node, the target third node may update the first target data stored in the target third node; otherwise, the target third node may ignore the target information, and not perform any processing.

In the foregoing two implementations, when the target third node is the node that is in the at least one third node and that is configured to store the first target data, the first node may calculate, according to the distribution algorithm corresponding to the distribution manner of the data in the global secondary index, data that is in the first target data and that is used as the distribution key of the global secondary index, and determine, based on a calculation result, that the node configured to store the first target data is the target third node. After determining the target third node, the first node may indicate the target third node to update, based on the received changed information or target information, the data that is included in the global secondary index and that is stored in the target third node.

For example, in the scenario described in the foregoing example 4, if a distribution key of the global secondary index class_stu_gsi is a class ID, after receiving the target information, the first node may calculate, according to a distribution algorithm corresponding to a distribution manner of the global secondary index class_stu_gsi, the target distribution key data, namely, the student ID 368 if the first node determines that the target information includes the first target data (namely, the class ID 11, the student ID 368, and the student name E), the target distribution key data (namely, the student ID 368), and the second location information corresponding to the changed data, and use a calculation result as the first location information corresponding to the changed data. For example, when the distribution manner of the global secondary index class_stu_gsi is hash distribution, the first location information corresponding to the changed data is a result obtained by performing hash calculation on the student ID 368. Based on this, the first node may obtain, through calculation, the location information corresponding to the changed data, and may send the first target data and the location information corresponding to the changed data to the target third node, so that the target third node correspondingly updates data that is included in the global secondary index class_stu_gsi and that is stored in the target third node. In the scenario of inserting, updating, or deleting the data in the base table in another example like Example 5 to Example 9, for a specific implementation used when the first node updates the global secondary index of the base table based on the target information from the target second node, refer to the implementation described in the foregoing example. Examples are not described one by one in embodiments of this application.

In the foregoing method, the global secondary index of the base table includes the location information corresponding to the data in the base table, instead of the primary key, the distribution key, or the partition key of the base table. Therefore, the global secondary index of the base table does not need to include the primary key, the distribution key, or the partition key of the base table, so that a data volume of the global secondary index of the base table can be appropriately reduced, and index bloat can be reduced. Especially when the primary key and the distribution key of the base table relate to a large quantity of attribute columns, a volume of data that needs to be maintained after the global secondary index is created can be significantly reduced, and efficiency of using the global secondary index can be improved. In the foregoing method, when the IUD operation is performed on the data in the base table, the first node may correspondingly update the global secondary index of the base table synchronously based on the target information returned by the node that performs the IUD operation. This can ensure high consistency between base table data and global secondary index data, and improve accuracy of using the base table and the global secondary index.

The following describes an implementation process of the foregoing method with reference to a specific example by using an example in which the first node is the coordinator node, and the second node and the third node are the data nodes in the foregoing embodiment.

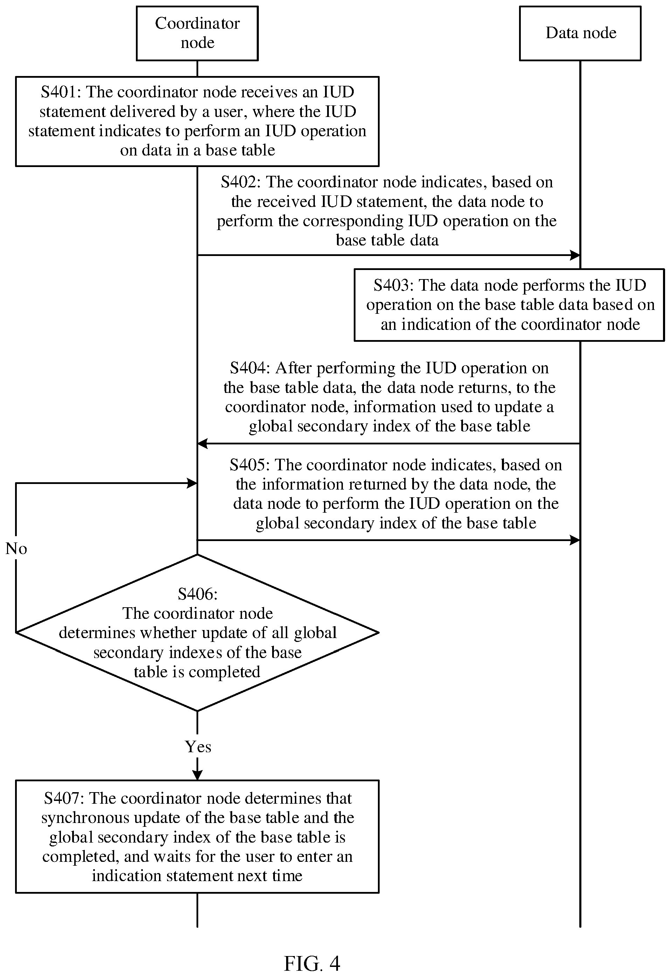

FIG. 4 is a flowchart of a method for processing a base table and a global secondary index of the base table in a distributed database according to an embodiment of this application. As shown in FIG. 4, a procedure of the method may include the following steps.

S401: A coordinator node receives an IUD statement delivered by a user, where the IUD statement indicate s to perform an IUD operation on data in a base table.

Optionally, the first indication in the foregoing embodiment may be the IUD statement.

In some embodiments of this application, the IUD statement may be an insert statement, an update statement, or a delete statement. The insert statement indicates to insert (add) data into the base table, the update statement indicates to update specified data in the base table, and the delete statement indicates to delete the specified data from the base table. After receiving the IUD statement entered by the user, the coordinator node may determine a user indication by parsing the IUD statement, and generate an execution plan. The execution plan is used to indicate an operation that needs to be performed by a data node.

S402: The coordinator node indicates, based on the received IUD statement, the data node to perform the corresponding IUD operation on the base table data.

After the coordinator node parses the IUD statement entered by the user, when determining that the IUD statement is the insert statement, the coordinator node may determine, based on a distribution manner of the base table data, the data node that performs the corresponding IUD operation, and indicate the data node to perform the corresponding IUD operation on the base table data. When the coordinator node determines that the IUD statement is the update statement or the delete statement, in an optional implementation, the coordinator node may send, to all data nodes, an indication of performing a corresponding IUD operation. After receiving the indication, if the data node determines that the data node stores data related to the IUD operation (namely, data indicated by the IUD statement), the data node performs the IUD operation. If the data node does not store the data related to the IUD operation, the data node ignores the indication of the coordinator node. In another optional implementation, the coordinator node may determine, based on the distribution manner of the base table data, the data node that performs the corresponding IUD operation, and indicate the data node to perform the corresponding IUD operation on the base table data.

S403: The data node performs the IUD operation on the base table data based on an indication of the coordinator node.

S404: After performing the IUD operation on the base table data, the data node returns, to the coordinator node, information used to update a global secondary index of the base table.

The information used to update the global secondary index of the base table may include the base table data related to the IUD operation and location information corresponding to the base table data, and may further include information like version information corresponding to the base table data and an index key of the global secondary index of the base table.

S405: The coordinator node indicates, based on the information returned by the data node, the data node to perform the IUD operation on the global secondary index of the base table.

In this step, the coordinator node may perform the corresponding IUD operation on the global secondary index of the base table on which the IUD operation is currently performed, to maintain consistency between global secondary index data and the base table data. Specifically, the coordinator node may send, to the data node, the execution plan for performing the IUD operation on the global secondary index, and the data node performs the IUD operation on the global secondary index based on the execution plan.

S406: The coordinator node determines whether update of all global secondary indexes of the base table is completed; and if the update is completed, performs step S407; otherwise, performs step S405.

The coordinator node performs the corresponding IUD operation on all global secondary indexes that need to be updated and that are associated with the base table on which the IUD operation is currently performed, until no global secondary index needs to be updated, and finally completes the update of the global secondary index of the base table.

S407: The coordinator node determines that synchronous update of the base table and the global secondary index of the base table is completed, and waits for the user to enter an indication statement next time.

The following describes the foregoing procedure by using an example with reference to a specific scenario. An example in which the base table is the base table 1 described in the foregoing embodiment and the global secondary index of the base table includes class_stu_gsi and name_doc_gsi described in the foregoing embodiment is used below for description.

### 1. Data adding scenario

For example, in the enrollment data scenario corresponding to the base table 1 (table 1), when the user expects to register information about a new student, the user may enter the insert statement on the coordinator node as an IUD indication of the base table. Inserted data includes student information that is expected to be registered by the user, and specifically includes a student ID 368, an enrollment document ID D106194, a student name E, and a class ID 11. For example, the insert statement entered by the user in this scenario may be the following structured query language (structured query language, SQL) statement: INSERT INTO table1 (studentid, docid, name, classid) VALUES (368, 'D106194', 'E', 11). INSERT INTO means insert into, and VALUES means values. A meaning of the insert statement is to insert a group (a row) of data whose studentid = 1, docid = D106194, name = E and classid = 11 into the base table 1.

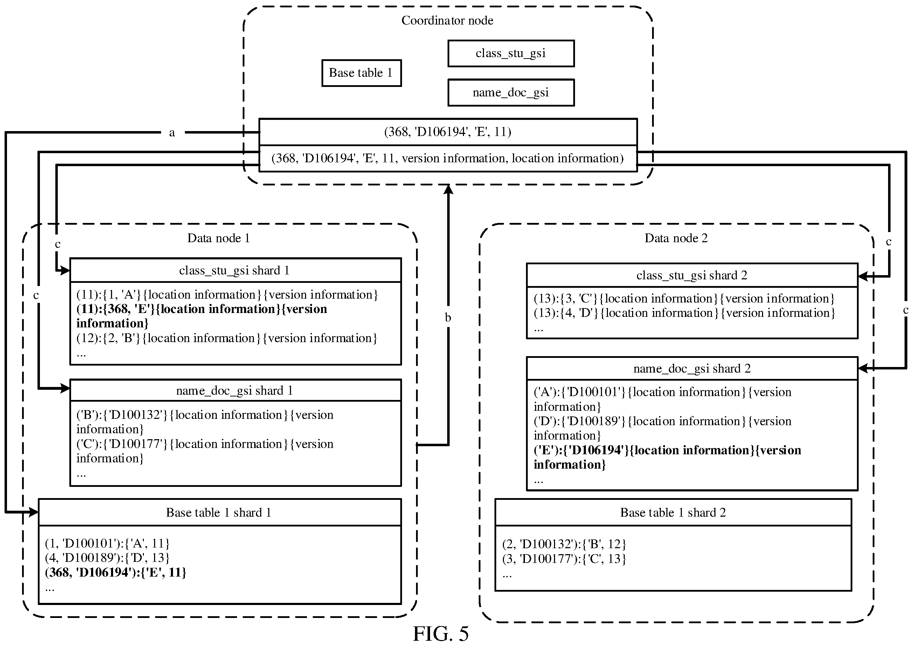

A procedure in which the coordinator node and the data node respond to the insert statement may include the following steps.
(1) As shown in a process a in FIG. 5, after receiving and parsing the insert statement, the coordinator node determines a data node used to store inserted data, namely, the data node 1, and sends, to the data node 1, an indication for inserting data.

For example, the indication delivered by the coordinator node to the data node 1 may be the following SQL statement: INSERT INTO table1 VALUES (368, 'D106194', 'E', 11) RETURNING studentid, docid, name, classid, {version information}, {location information}. A meaning of the statement is to insert a group of data (namely, a tuple) whose values are 368, 'D106194', 'E', and 11 into the base table 1, and return values of data that is in the inserted data and that belongs to the four attributes namely, the student ID, the enrollment document ID, the student name, and the class ID, and version information and location information corresponding to the inserted data. Optionally, the version information may be optional information.

Optionally, in the foregoing process, after receiving and parsing the insert statement, the coordinator node may alternatively send an indication for inserting data to all data nodes that store the base table. After receiving the indication, each data node may calculate, according to a distribution algorithm corresponding to the distribution manner of the base table, data that is in the inserted data and that is used as a distribution key of the base table, and determine, based on a calculation result, a node configured to store the inserted data. If the node that is determined by the data node and that is configured to store the inserted data is the data node, the following step of inserting data may be performed. If the node that is determined by the data node and that is configured to store the inserted data is another node, the indication may be ignored, and no other processing is performed.

(2) As shown in a process b in FIG. 5, after receiving the indication for inserting data, the data node 1 inserts the data into the base table 1, and returns, to the coordinator node, data that is in the inserted data (368, 'D106194', 'E', 11) and whose attribute is the same as an attribute of the global secondary index of the base table (including data whose attribute is the same as an attribute of data in class_stu_gsi and data whose attribute is the same as an attribute of data in name_doc_gsi) and information like the location information and the version information corresponding to the inserted data.

(3) After receiving the information returned by the data node, the coordinator node may calculate, based on the distribution key of the global secondary index of the base table, data nodes on which the two indexes class_stu_gsi and name_doc_gsi of the base table are located, namely, the data node 1 and the data node 2. After determining the data node 1 and the data node 2, the coordinator node may send, to the data node 1 and the data node 2, an indication for inserting global secondary index data into the global secondary index of the base table, as shown in a process c in FIG. 5.

For example, an indication delivered by the coordinator node to the data node 1 and the data node 2 for inserting the global secondary index data into class_stu_gsi may be the following SQL statement: INSERT INTO class_stu_gsi (classid, studentid, name, {version information}, {location information}) VALUES (11, 368, 'E', {version value}, {location value}). A meaning of the statement is to insert, into the global secondary index class_stu_gsi, data whose value of the class ID is 11, value of the student ID is 368, value of the student name is E, value of the version information is a version value, and value of the location information is a location value. An indication delivered by the coordinator node to the data node 1 and the data node 2 for inserting the GSI data into name_doc_gsi may be the following SQL statement: INSERT INTO name_doc_gsi (name, docid, {version information}, {location information}) VALUES ('E', 'D106194', {version value}, {location value}). A meaning of the statement is to insert, into the global secondary index name_doc_gsi, data whose value of the student name is E, value of the enrollment document ID is D106194, value of the version information is a version value, and value of the location information is a location value.

A final execution plan of the foregoing procedure is as follows:

```
     Plan:
     Insert GSI(s) on table1
     Node name: All datanodes
     Remote Query: INSERT INTO class_stu_gsi
(classid, studentid, name, {version information}, {location
 information}) VALUES (11, 368, 'E', {version value}, {location value})
     Insert GSI(s) on table1
     Node name: All datanodes
     Remote Query: INSERT INTO name_doc_gsi
(name, docid, {version information}, {location information})
 VALUES ('E', 'D106194', {version value}, {location value})
     Insert on table 1
     Output: studentid, docid, name, classid, {version information}, {location information}
     Node name: datanode 1
     Remote Query: INSERT INTO table1 VALUES
(368, 'D106194', 'E', 11) RETURNING studentid, docid, name,
 classid, {version information}, {location information}
     
```

The execution plan is executed from bottom to top, and a meaning of the execution plan is as follows:
The following statement is sent to the data node 1: INSERT INTO table1 VALUES (368, 'D106194', 'E', 11) RETURNING studentid, docid, name, classid, {version information}, {location information}, so that the data node 1 updates the data included in the base table 1, namely, the inserted data. After inserting data into the base table 1, the data node 1 returns values of the following attributes in the inserted data to the coordinator node: studentid, docid, name, classid, {version information}, and {location information}. After receiving the information returned by the data node 1, the coordinator node sends the following statements to all data nodes, namely, the data node 1 and the data node 2: INSERT INTO name_doc_gsi (name, docid, {version information}, {location information}) VALUES ('E', 'D106194', {version value}, {location value}), and INSERT INTO class_stu_gsi (classid, studentid, name, {version information}, {location information}) VALUES (11, 368, 'E', {version value}, {location value}), so that the data node 1 and the data node 2 update data in two GSIs: name_doc_gsi and class_stu_gsi.

### 2. Data update scenario

### Example 1

For example, in the enrollment data scenario corresponding to the base table 1 (table 1), when the user expects to update the enrollment document ID of a student C whose student ID is 3 from "D100177" to "D100777", the user may enter an update statement on the coordinator node as an IUD indication of the base table. For example, the update statement entered by the user may be the following SQL statement: UPDATE table 1 SET docid = 'D100777' WHERE studentid = 3. UPDATE means insert, SET means set, and WHERE means location. A meaning of the update statement is to update and set an enrollment document ID in a row of data (tuple) whose value of the student ID is 3 in the base table 1 to "D100777."

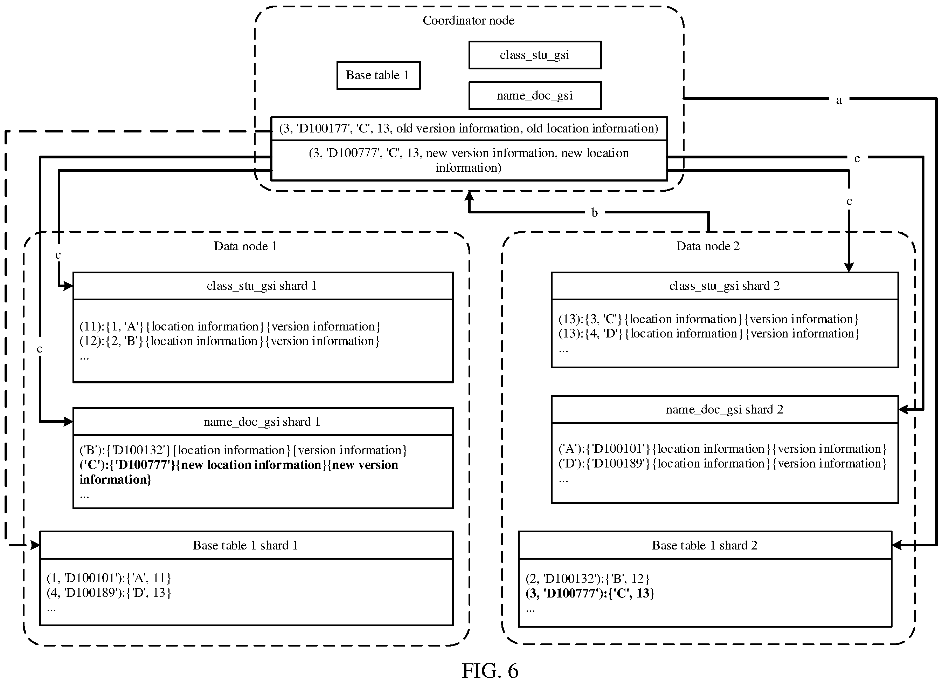

A procedure in which the coordinator node and the data node respond to the insert statement may include the following steps.
(1) As shown in a process a in FIG. 6, after receiving and parsing the update statement, the coordinator node determines a data node used to store to-be-updated data, namely, the data node 2, and sends an indication for updating data to the data node 2. Optionally, the coordinator node may alternatively send an indication for updating data to all nodes. As shown in the process a and a process marked by a dashed line in FIG. 6, the coordinator node may send the indication for updating data to both the data node 1 and the data node 2.

For example, the indication delivered by the coordinator node to the data node 2 may be the following SQL statement: UPDATE table 1 SET docid = 'D 100777' WHERE studentid = 3 RETURNING old studentid, old docid, old name, old classid, {old version information}, {old location information}, new studentid, new docid, new name, new classid, {new version information}, {new location information}. A meaning of the statement is to update the enrollment document ID in the row of data whose value of the student ID is 3 in the base table 1 to "D100777", and return values of data that is in pre-update data and that belongs to four attributes: the student ID, the enrollment document ID, the student name, and the class ID, and version information and location information that correspond to the pre-update data (namely, a row of data whose student ID is 3 before update); and values of data that is in post-update data (namely, post-update data corresponding to the row of data whose student ID is 3 before update) and that belongs to four attributes: the student ID, the enrollment document ID, the student name, and the class ID, and version information and location information that correspond to the post-update data. The old studentid, old docid, old name, and old classid in the statement are respectively data values of four attributes: the student ID, the enrollment document ID, the student name, and the class ID in the pre-update data, a new studentid, a new docid, a new name, and a new classid are values of data that is in the post-update data and that belongs to four attributes: the student ID, the enrollment document ID, the student name, and the class ID. Optionally, the version information may be optional information.

(2) After receiving the indication for updating data, the data node 2 updates, based on the indication, a value of an enrollment document ID in a row of data, in which the student ID is 3, that is in the base table and that is stored in the data node 2 to "D100777". After update, the data node 2 returns, to the coordinator node, data that is in the row of data before and after update (before update: 3, 'D100177', 'C', 13; and after update: 3, 'D100777', 'C', 13) and whose attribute is the same as the attribute of the GSI in the base table (including data whose attribute is the same as the attribute of the data in class_stu_gsi and data whose attribute is the same as the attribute of the data in name_doc_gsi) and information like location information and version information that correspond to the row of data before and after update, as shown in a process b in FIG. 6.

(3) After receiving the information returned by the data node 2, the coordinator node may calculate, based on the distribution key of the global secondary index of the base table, data nodes on which the two global secondary indexes class_stu_gsi and name_doc_gsi of the base table are located, namely, the data node 1 and the data node 2. After determining the data node 1 and the data node 2, the coordinator node may send, to the data node 1 and the data node 2, an indication for updating the global secondary index data in the base table, as shown in a process c in FIG. 6.

For example, an indication delivered by the coordinator node to the data node 1 and the data node 2 for updating class _stu_gsi data may be the following SQL statement: UPDATE class_stu_gsi SET classid = 13,name = 'C', studentid = 3, {version information} = {new version value}, {location information} = {new location value} WHERE {location information} = {old location value}. A meaning of the statement is to update, in the global secondary index class_stu_gsi, data whose value of corresponding location information is the old location value to data whose value of the class ID is 13, value of the student name is C, value of the student ID is 3, value of the version information is the new version value, and value of the location information is the new location value. An indication delivered by the coordinator node to the data node 1 and the data node 2 for updating name_doc_gsi data may be the following SQL statement: UPDATE name_doc_gsi SET name = 'C', docid = 'D100777', {version information} = {New version value}, {location information} = {new location value} WHERE {location information} = {old location value}. A meaning of the statement is to update, in the global secondary index name_doc_gsi, data whose value of corresponding location information is the old location value to data whose value of the student name is C, value of the enrollment document ID is D 100777, value of the version information is the new version value, and value of the location information is the new location value.

A final execution plan of the foregoing procedure is as follows:

```
     Plan:
     Update GSI(s) on table1
     Node name: All datanodes
     Remote Query: UPDATE class_stu_gsi SET classid
= 13,name = 'C', studentid = 3, {version information} =
 {new version value}, {location information} = {new
location value} WHERE {location information} = {old location
 value}
     Update GSI(s) on table1
     Node name: All datanodes
     Remote Query: UPDATE name_doc_gsi SET name =
'C', docid = 'D100777', {version information} = {new
     version value}, {location information} = {new
location value} WHERE {location information} = {old location value}
```

Update on table 1 Output: Old studentid, old docid, old name, old classid, {old version information}, {old location information}, new studentid, new docid, new name, new classid, {new version information}, {New location information} Node name: All datanodes Remote Query:UPDATE table1 SET docid = 'D100777' WHERE studentid = 3 RETURNING old studentid, old docid, old name, old classid, {old version information}, {old location information}, new studentid, new docid, new name, new classid, {new version information}, {new location information}

The execution plan is executed from bottom to top, and a meaning of the execution plan is as follows:
The following statement is sent to all data nodes (the data node 1 and the data node 2): UPDATE table1 SET docid = 'D100777' WHERE studentid = 3 RETURNING old studentid, old docid, old name, old classid, {old version information}, {old location information}, new studentid, new docid, new name, new classid, {new version information}, {new location information}. Because a row of data whose student ID is 3 is stored on the data node 2, only the data node 2 updates the enrollment document ID in the row of data to D100777, and the data node 1 does not perform any processing. After updating a row of data whose student ID is 3 in the base table 1, the data node 2 returns, to the coordinator node, values of the following attributes in the row of data before and after update: studentid, docid, name, classid, {version information}, and {location information}. After receiving the information returned by the data node 2, the coordinator node sends the following statement to all data nodes, namely, the data node 1 and the data node 2: UPDATE name_doc_gsi SET name = 'C', docid = 'D100777', {version information} = {new version value}, {location information} = {new location value} WHERE {location information} = {old location value}, and UPDATE class_stu_gsi SET classid = 13, name = 'C', studentid = 3, {version information} = {new version value}, {location information} = {new location value} WHERE {location information} = {old location value}, so that the data node 1 and the data node 2 update data in two GSIs: name_doc_gsi and class_stu_gsi.

### Example 2

For example, in the enrollment data scenario corresponding to the base table 1 (table1), if the base table 1 has only one global secondary index class_stu_gsi, when the user expects to update the enrollment document ID of a student C whose student ID is 3 from "D100177" to "D100777", the user may enter an update statement on the coordinator node as an IUD indication of the base table. For example, the update statement entered by the user may be the following SQL statement: UPDATE table1 SET docid = 'D100777' WHERE studentid = 3. A meaning of the update statement is to update and set an enrollment document ID in a row of data (namely, a tuple) whose value of the student ID is 3 in the base table 1 to "D100777."

A procedure in which the coordinator node and the data node respond to the insert statement may include the following steps.
(1) After receiving and parsing the update statement, the coordinator node determines a data node used to store to-be-updated data, namely, the data node 2, and sends an indication for updating data to the data node 2. Optionally, the coordinator node may alternatively send the indication for updating data to all nodes. For details, refer to the method described in step (1) in the foregoing example 1. Details are not described herein again.
(2) After receiving the indication for updating data, the data node 2 updates, based on the indication, a value of an enrollment document ID in a row of data, in which the student ID is 3, that is in the base table and that is stored in the data node 2 to "D100777".

In the foregoing process, because the global secondary index class_stu_gsi does not include data belonging to the attribute of the enrollment document ID, after the enrollment document ID of the student C whose student ID is 3 is updated, data in class_stu_gsi is not affected. In other words, data in class_stu_gsi after the update is actually consistent with data in class_stu_gsi before the update. In this scenario, class_stu_gsi does not need to be updated additionally. Therefore, the coordinator node and the data node only need to perform the methods described in step (1) and step (2) to update the data in the base table.

### 3. Data deletion scenario

For example, in the enrollment data scenario corresponding to the base table 1 (table 1), when the user expects to delete information about one student from the base table 1, the user may enter a delete statement on the coordinator node as an IUD indication of the base table. The deleted data includes student information that is expected to be deleted by the user, and specifically includes a student ID 2, an enrollment document ID D100132, a student name B, and a class ID 12. For example, the delete statement entered by the user may be the following SQL statement: DELETE FROM table 1 WHERE studentid = 2 AND docid = 'D100132'. DELETE FROM table 1 means delete from the base table 1, and a meaning of the delete statement is to delete a group (a row) of data whose studentid = 2 and docid = D100132 in the base table 1.

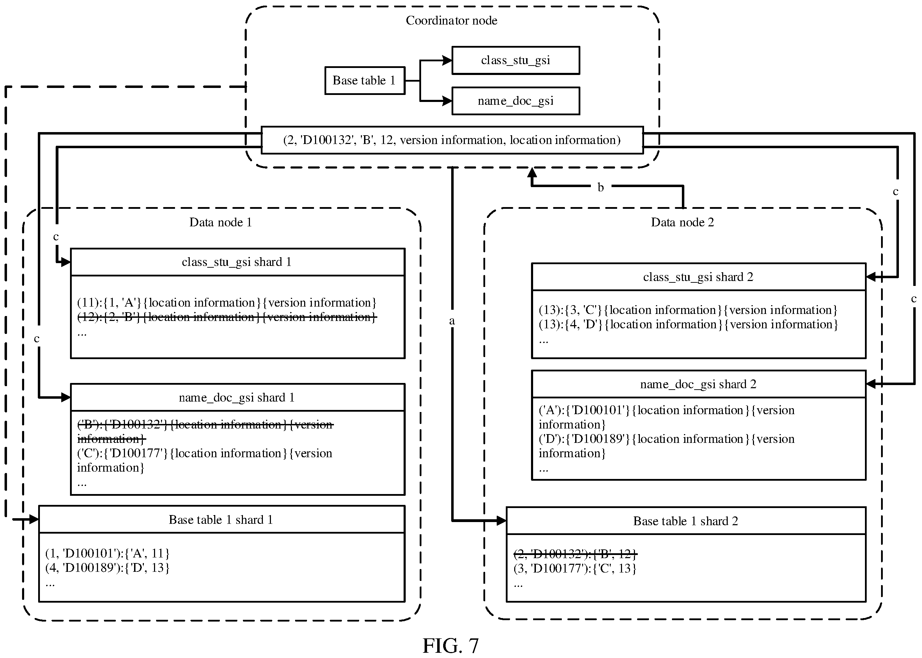

A procedure in which the coordinator node and the data node respond to the insert statement may include the following steps.
(1) As shown in a process a shown in FIG. 7, after receiving and parsing the delete statement, the coordinator node determines a data node configured to store the deleted data, namely, the data node 2, and sends an indication for deleting data to the data node 2. Optionally, the coordinator node may alternatively send an indication for deleting data to all nodes. As shown in the process a and a process marked by a dashed line in FIG. 7, the coordinator node may send the indication for deleting data to the data node 1 and the data node 2.
   For example, an indication delivered by the coordinator node to the data node 2 may be the following SQL statement: DELETE FROM table1 WHERE studentid = 2 AND docid = 'D100132' RETURNING studentid, docid, name, classid, {version information}, {location information}. A meaning of the statement is to delete a group (a row) of data whose studentid = 2 and docid = D100132 from the base table 1, and return data values of the four attributes (the student ID, the enrollment document ID, the student name, and the class ID) in the deleted data, and the version information and location information corresponding to the deleted data. Optionally, the version information may be optional information.
(2) After receiving the indication for deleting data, the data node 2 performs a deletion operation on corresponding data (2, 'D100132', 'B', 12) in the base table 1. After deletion, the data node 2 returns, to the coordinator node, data that is in the deleted data and whose attribute is the same as the attribute of the global secondary index in the base table (including data whose attribute is the same as the attribute of the data in class_stu_gsi and data whose attribute is the same as the attribute of the data in name_doc_gsi), and information like location information and version information that correspond to the deleted data, as shown in a process b shown in FIG. 7.
(3) After receiving the information returned by the data node 2, the coordinator node may calculate, based on the distribution key of the global secondary index of the base table, data nodes on which the two indexes class_stu_gsi and name_doc_gsi of the base table are located, namely, the data node 1 and the data node 2. After determining the data node 1 and the data node 2, the coordinator node may send, to the data node 1 and the data node 2, an indication for deleting global secondary index data into the global secondary index of the base table, as shown in a process c in FIG. 7.

For example, an indication delivered by the coordinator node to the data node 1 and the data node 2 for deleting the global secondary index data in class_stu_gsi may be the following SQL statement: DELETE FROM class_stu_gsi WHERE {location information} = {locationvalue}. A location value in the statement is a value of location information corresponding to a row of data whose studentid = 2 and docid = D100132. A meaning of the statement is to delete data whose value of the location information is the location value from the global secondary index class_stu_gsi. An indication delivered by the coordinator node to the data node 1 and the data node 2 for deleting the global secondary index data in name_doc_gsi may be the following SQL statement: DELETE FROM name_doc_gsi WHERE {location information} = {location value }. A location value in the statement is a value of location information corresponding to a row of data whose studentid = 2 and docid = D100132. A meaning of the statement is to delete data whose value of the location information is the location value from the global secondary index name_doc_gsi.

A final execution plan of the foregoing process is as follows:

```
     Plan:
     Delete GSI(s) on table1
     Node name: All datanodes
     Remote Query: DELETE FROM class_stu_gsi WHERE {location information} = {location value}
     Delete GSI(s) on table1
     Node name: All datanodes
     Remote Query: DELETE FROM name_doc_gsi WHERE {location information} = {location value}
     Delete on table 1
     Output: studentid, docid, name, classid, {version information}, {location information}
     Node name: All datanodes
     Remote Query: DELETE FROM table 1 WHERE
studentid = 2 AND docid = 'D 100132' RETURNING studentid,
 docid, name, classid, {version information}, {location information}
```

The execution plan is executed from bottom to top, and a meaning of the execution plan is as follows:
The following statement is sent to all data nodes (the data node 1 and the data node 2): DELETE FROM table1 WHERE studentid = 2 AND docid = 'D 100132' RETURNING studentid, docid, name, classid, {version information}, {location information}. Because a row of data whose student ID is 2 and enrollment document ID is D100132 is stored in the data node 2, only the data node 2 deletes the row of data, and the data node 1 does not perform any processing. After performing the delete operation on the row of data, the data node 2 returns values of the following attributes in the deleted data to the coordinator node: studentid, docid, name, classid, {version information}, and {location information}. After receiving the information returned by the data node 2, the coordinator node sends the following statements to all data nodes, namely, the data node 1 and the data node 2: DELETE FROM name_doc_gsi WHERE {location information} = {location value}, and DELETE FROM class_stu_gsi WHERE {location information} = {location value}, so that the data node 1 and the data node 2 delete corresponding data in two GSIs: name_doc_gsi and class_stu_gsi.

The foregoing embodiment describes a solution in which the base table and the global secondary index of the base table are synchronously updated when the IUD operation is performed on the base table. In some embodiments of this application, the first node may further query data in the base table based on the base table and the global secondary index of the base table. Details are described below.

In some embodiments of this application, after the base table is created, the first node may receive a second indication delivered by the user, where the second indication indicates to obtain the second target data that meets the first condition and that is in the base table. After receiving the second indication, the first node may determine, based on the second indication, an attribute to which the second target data belongs, for subsequent query.

In an optional implementation, when the first node determines that the at least one attribute in the global secondary index of the base table includes all the attributes to which the second target data belongs, the first node may select, from data included in the global secondary index, the second target data that meets the first condition.

For example, when the base table is the foregoing base table 1 and the global secondary index of the base table 1 includes only the foregoing class_stu_gsi, if the user expects to query student names and student IDs of all students whose class IDs are 13 in the base table 1, the first condition is: a corresponding class ID is 13, and an attribute is a student name and a student ID. The second target data is data that is included in the base table 1 and whose corresponding class ID is 13 and attributes are the student name and the student ID, and attributes to which the second target data belongs are the class ID, the student name, and the student ID. The global secondary index in the foregoing embodiment is class_stu_gsi, and the at least one attribute is an attribute of data in class_stu_gsi, namely, the class ID, the student ID, and the student name. It may be determined, by comparing the at least one attribute with the attribute to which the second target data belongs, that the at least one attribute includes (overwrites) all the attributes to which the second target data belongs. In this case, the first node may query the second target data from the global secondary index, namely, class_stu_gsi.

In another optional implementation, when the first node determines that the at least one attribute in the global secondary index of the base table does not include all the attributes to which the second target data belongs, and there is an intersection between a target attribute in the at least one attribute and the attribute to which the second target data belongs, the first node may determine the second target data based on the global secondary index, where the target attribute is used as an index key of the global secondary index. Specifically, the first node may select, from the data included in the global secondary index, third target data that meets a part or all of the first condition; and obtain, from a storage location indicated by location information corresponding to the third target data, the second target data that meets the first condition. The location information corresponding to the third target data may be used as the location information corresponding to the second target data. Optionally, before determining the second target data based on the global secondary index, the first node further needs to determine that attributes of data in other global secondary indexes of the base table do not include all attributes to which the second target data belongs.

For example, when the base table is the foregoing base table 1 and the global secondary index of the base table 1 includes only the foregoing name_doc_gsi, if the user expects to query student names and enrollment document IDs of all students whose class IDs are 12 in the base table 1, the first condition is: a corresponding class ID is 12, and a belonging attribute is a student name and an enrollment document ID. The second target data is data that is included in the base table 1 and that corresponds to a class ID 12 and whose attributes are a student name and an enrollment document ID, and attributes to which the second target data belongs are the class ID, the student name, and the enrollment document ID. The global secondary index of the base table is name_doc_gsi, and the at least one attribute is an attribute related to data in name_doc_gsi, namely, the student name and the enrollment document ID. It may be determined, by comparing the at least one attribute with the attribute to which the second target data belongs, that the at least one attribute does not include (overwrite) all the attributes to which the second target data belongs, and the first node cannot directly query the second target data from the global secondary index, namely, name_doc_gsi, the first node needs to return to the base table to query the second target data. In this case, the first node may determine the storage location of the second target data in the base table based on the location information in the global secondary index, and query the second target data from data stored at the determined storage location, so that a query speed can be improved to some extent. Specifically, the first node may determine that the at least one attribute includes a part of the attribute to which the second target data belongs, namely, the class ID, and the first condition includes a condition that the class ID is 12. In this case, the first node may first query data whose class ID is 12 from the data included in name_doc_gsi, and determine location information corresponding to the data obtained through query. After obtaining the location information through query, the first node may obtain, by querying data stored at a storage location indicated by the location information, data whose class ID is 12 and whose attribute is the student name and the enrollment document ID.

In some embodiments of this application, when the base table has a plurality of global secondary indexes, in the foregoing process, after the first node determines, based on the second indication, the attribute to which the second target data belongs, the following steps are performed: The second target data may be obtained by querying the global secondary index after any global secondary index in which an attribute related to included data covers all attributes to which the second target data belongs is first selected from the plurality of global secondary indexes. If none of attributes related to data included in all global secondary indexes of the base table covers all attributes to which the second target data belongs, the first node may select, from the plurality of global secondary indexes, a global secondary index whose any attribute covers a part of attributes to which the second target data belongs (in other words, there is an intersection between the attribute and the attribute to which the second target data belongs), determine a storage location of the second target data in the base table based on the location information in the global secondary index, and query data stored in the storage location for the second target data.

In some embodiments of this application, when the global secondary index does not exist in the base table, when querying the second target data that meets the first condition, the first node may directly query the base table for the second target data.

In the foregoing method, when the attributes in the global secondary index of the base table cover all the attributes of the data that needs to be queried, the first node may directly query the global secondary index for the data that needs to be queried. Therefore, the first node needs to query only a small amount of data included in the global secondary index, and does not need to query a large amount of data included in the base table. This greatly improves a query speed and efficiency. In the foregoing method, when the attributes in the global secondary index of the base table do not cover all the attributes of the data to be queried, the first node may determine the storage location of the data to be queried in the base table based on the location information in the global secondary index, further, data may be returned to a specific location in the base table for data query, and there is no need to query all data in the base table, so that a query speed and efficiency can also be improved.

The following describes an implementation process of the foregoing method with reference to a specific example by using an example in which the first node is the coordinator node, and the second node and the third node are the data nodes in the foregoing embodiment.

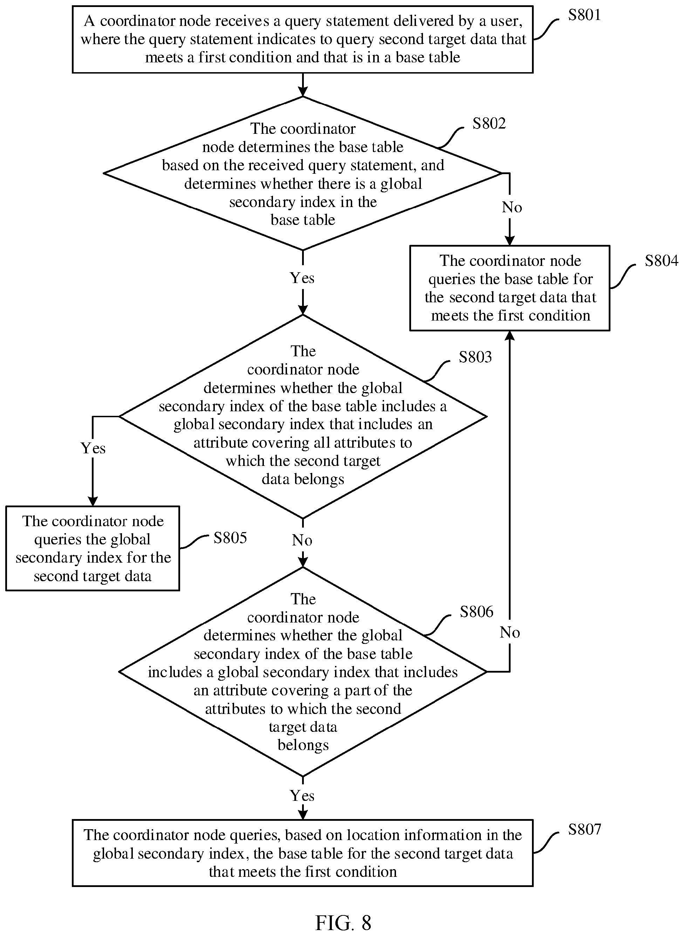

FIG. 8 is a flowchart of a method for querying base table data according to an embodiment of this application. As shown in FIG. 8, a procedure of the method may include the following steps.

S801: A coordinator node receives a query statement delivered by a user, where the query statement indicate s to query second target data that meets a first condition and that is in a base table.

The first condition is a query condition set by the user by using the query statement.

S802: The coordinator node determines the base table based on the received query statement, and determines whether there is a global secondary index in the base table; and if yes, performs step S803; otherwise, performs step S804.

In this step, the coordinator node may parse the query statement, determine whether the global secondary index is constructed for the base table indicated in the query statement, and further determine whether the global secondary index exists in the base table.

S803: The coordinator node determines whether the global secondary index of the base table includes a global secondary index that includes an attribute covering all attributes to which the second target data belongs; and if yes, performs step S805; otherwise, performs step S806.

S804: The coordinator node queries the base table for the second target data that meets the first condition.

In this step, the coordinator node may directly query the base table for the second target data that meets the first condition. Specifically, the coordinator node may indicate the at least one data node that stores the base table to query the data stored in the at least one data node for the second target data that meets the first condition. After obtaining the second target data through query, any one of the at least one data node may return the second target data to the coordinator node, then, the coordinator node feeds back the received second target data to the user.

S805: The coordinator node queries the global secondary index for the second target data.

In this step, the coordinator node may indicate the at least one data node storing the global secondary index to query, for the second target data that meets the first condition, the data that is of the global secondary index and that is stored in the at least one data node, after obtaining the second target data through query, any one of the at least one data node may return the second target data to the coordinator node, and then the coordinator node feeds back the received second target data to the user. Query efficiency of directly querying, by the coordinator node, the second target data from the global secondary index is the highest.

S806: The coordinator node determines whether the global secondary index of the base table includes a global secondary index that includes an attribute covering a part of the attributes to which the second target data belongs; and if yes, performs step S807; otherwise, performs step S804.

S807: The coordinator node queries, based on location information in the global secondary index, the base table for the second target data that meets the first condition.

In this step, the coordinator node may determine, based on the location information in the global secondary index, the location information corresponding to the second target data, and then determine the location of the second target data in the base table based on the location information corresponding to the second target information, further, the second target data is obtained by querying data at a corresponding location in the base table. Efficiency of performing data query in this manner is higher than efficiency of directly querying data from the entire base table in step S804.

The following describes the foregoing procedure by using an example with reference to a specific scenario. An example in which the base table is the base table 1 described in the foregoing embodiment and the global secondary index of the base table includes class_stu_gsi and name_doc_gsi described in the foregoing embodiment is used below for description.

### 1. Scenario in which data query is directly performed by using the global secondary index

For example, in the enrollment data scenario corresponding to the base table 1 (table 1), when the user expects to query student names and student IDs of all students in a class by using a known class ID 13, the user may enter a query statement on the coordinator node, the user may indicate, by using an input query statement, a base table in which data that meets a specific condition needs to be queried. For example, in this scenario, the query statement entered by the user may be the following SQL statement: SELECT classid, studentid, name FROM table 1 WHERE classid = 13. SELECT means query. A meaning of the query statement is to query the base table 1 for the data of three attributes: the class ID, student ID, and student name corresponding to the class ID 13.

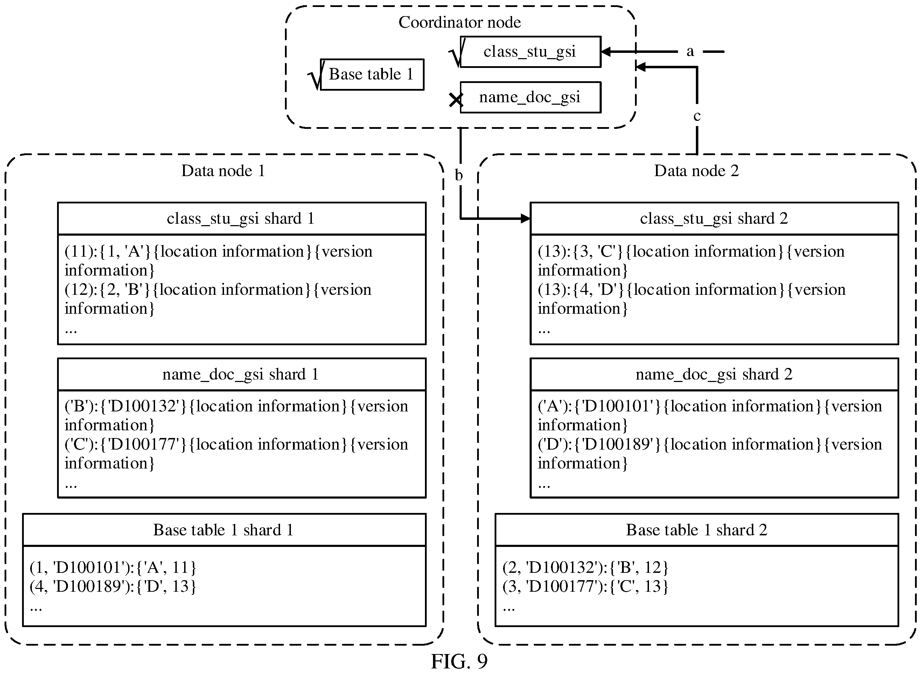

A procedure in which the coordinator node and the data node respond to the query statement may include the following steps.
(1) After receiving and parsing the query statement, the coordinator node may determine that the class ID in the query statement is not the distribution key of the base table 1, and may determine that the data that needs to be queried by using the query statement may be distributed on any node in the at least one data node configured to store the data of the base table 1. The performance of directly querying the base table 1 may not be optimal. In this case, the coordinator node may determine, by checking all global secondary indexes in the base table, whether there is a global secondary index that includes an attribute covering all attributes in the query statement. Based on the check result, it can be determined that all attributes (the class ID, the student ID, and the student name) related to the query statement are covered by attributes (the class ID, the student ID, and the student name) in the global secondary index class_stu_gsi. In this case, it may be determined that a result obtained by directly querying the global secondary index class_stu_gsi for the data that needs to be queried by using the query statement is equivalent to a result obtained by querying the base table 1. Therefore, the coordinator node may determine that the data that needs to be queried by using the query statement can be directly obtained by querying the global secondary index class_stu_gsi, as shown in a process a in FIG. 9.
   A cross marked at name_doc_gsi in FIG. 9 indicates that an attribute in name_doc_gsi does not cover all attributes related to the query statement. Therefore, data that needs to be queried cannot be directly obtained by querying name_doc_gsi. In FIG. 9, a cross marked at class_stu_gsi indicates that an attribute in class_stu_gsi covers all attributes related to the query statement. Therefore, data that needs to be queried may be directly obtained by querying class_stu_gsi. A tick marked at the base table 1 in FIG. 9 indicates that data that needs to be queried may also be obtained by querying the base table 1.
(2) When determining that data can be directly obtained by querying the global secondary index class_stu_gsi, the coordinator node may determine, based on metadata of the global secondary index class_stu_gsi, that the class ID is a distribution key of class _stu_gsi, and data in class_stu_gsi is distributed in a hash distribution manner. Therefore, the coordinator node performs a hash operation on the class ID 13 in the query statement by using a hash algorithm, and may determine, based on an operation result, that data that needs to be queried by using the query statement is distributed in the data node 2 (datanode2). In this case, the coordinator node may directly query the class_stu_gsi data stored on the data node 2 for the data that needs to be queried. As shown in a process b in FIG. 9, the coordinator node may send a global secondary index query indication to the data node 2. So as to indicate the data node 2 to query, in the class_stu_gsi data stored in the data node 2, data of three attributes: a class ID, a student ID, and a student name whose class ID is 13.
(3) After receiving the global secondary index query indication delivered by the coordinator node, the data node 2 performs query based on the indication, and returns data obtained through query, namely, (13, 3, 'C') and (13, 4, 'D'), to the coordinator node, as shown in a process c in FIG. 9.

Based on the foregoing manner, the coordinator node may query the GSI in the single data node and obtain the data that needs to be queried, and does not need to traverse all data nodes. Therefore, a query speed and efficiency are high.

A final execution plan of the foregoing query process is as follows:

```
     Plan:
     Data Node Scan
     Node name: datanode2
     Index Only Scan using class_stu_gsi
     Index condition: (classid = 13)
     
```

The foregoing execution plan is executed from bottom to top, and a meaning of the foregoing execution plan is: performing index scanning on the global secondary index class_stu_gsi on the data node 2, determining that classid = 13 is true, and returning all results.

### (2) Scenario in which data query is performed based on the global secondary index for table access by index row

For example, in the enrollment data scenario corresponding to the base table 1 (table 1), when the user expects to query student names and enrollment document IDs of all students in a class by using a known class ID 12, the user may enter a query statement on the coordinator node, the user may indicate, by using an input query statement, a base table in which data that meets a specific condition needs to be queried. For example, in this scenario, the query statement entered by the user may be the following SQL statement: SELECT classid,name,docid FROM table1 WHERE classid = 12. The meaning of the query statement is to query the base table 1 for data of three attributes: the class ID, the student name, and the enrollment document ID corresponding to the class ID 12.

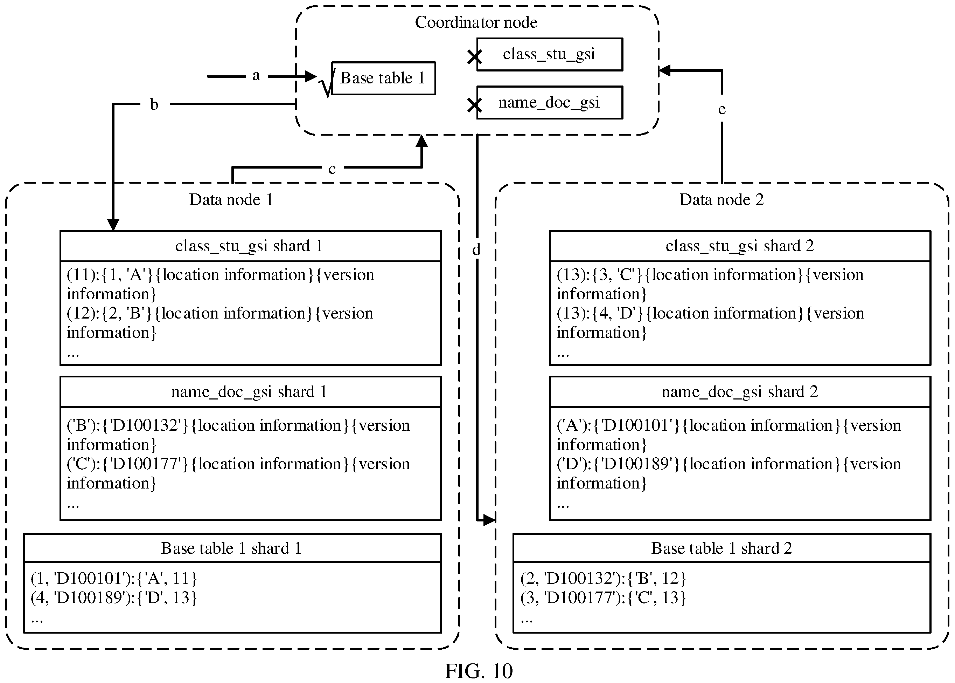

A procedure in which the coordinator node and the data node respond to the query statement may include the following steps.
(1) After receiving and parsing the query statement, the coordinator node may determine that the class ID in the query statement is not the distribution key of the base table 1, and may determine that the data that needs to be queried by using the query statement may be distributed on any node in the at least one data node configured to store the data of the base table 1. The performance of querying directly from the base table 1 may not be optimal. In this case, the coordinator node may determine, by checking all global secondary indexes in the base table, whether there is a global secondary index that includes an attribute covering all attributes in the query statement. It may be determined, based on a check result, that the global secondary index of the base table 1 does not include a global secondary index that can cover all attributes (the class ID, the student name, and the enrollment document ID) related to the query statement. In this case, it may be determined that the data that needs to be queried by using the query statement cannot be directly obtained by querying the global secondary index of the base table 1, and it is required to return to the base table 1 for data query, as shown in a process a in FIG. 10. A cross marked at class_stu_gsi and a cross marked at name_doc_gsi in FIG. 10 indicate that neither an attribute in class_stu_gsi nor an attribute in name_doc_gsi covers all attributes in the query statement. Therefore, the data to be queried cannot be directly obtained by querying class_stu_gsi and name_doc_gsi. A tick marked at the base table 1 in FIG. 10 indicates that data that needs to be queried may be obtained by querying the base table 1.
(2) When determining that data cannot be directly obtained by querying the global secondary index of the base table 1, the coordinator node may select, from the global secondary index of the base table 1, a global secondary index that covers some attributes in the query statement, determine, based on the global secondary index, a data node that stores the data that needs to be queried, and then query the determined data node for the data that needs to be queried. For example, the global secondary index class_stu_gsi of the base table 1 covers some attributes (the class ID and the student ID) in the query statement, and an attribute having a value condition in the query statement, namely, the class ID (a value of the value condition = 12), is a distribution key of the global secondary index class_stu_gsi. In this case, it may be determined that location information corresponding to a class ID whose value is 12 in the global secondary index class_stu_gsi is also location information corresponding to data that needs to be queried and that is indicated by the query statement. Because a distribution manner of the global secondary index class _stu_gsi is hash distribution, the coordinator node may perform a hash operation on the class ID 12 in the query statement according to a hash algorithm, and determine, based on an operation result, that data that is of the global secondary index class_stu_gsi and whose class ID is 12 is distributed in the data node 1 (datanode 1). In this case, the coordinator node may indicate the data node 1 to query class_stu_gsi for location information corresponding to data whose corresponding class ID is 12, as shown in a process b in FIG. 10.
(3) After receiving the indication of the coordinator node, the data node 1 queries the stored class _stu_gsi for location information corresponding to the data whose class ID is 12, and returns the location information obtained through query to the coordinator node, as shown in a process c in FIG. 10.
(4) After obtaining, from the data node 1, the location information corresponding to the data whose class ID is 12 in class_stu_gsi, the coordinator node may determine, based on the location information, a data node that is configured to store the data whose corresponding class ID is 12 in the base table, namely, the data node 2, and a storage location, in the data node, of data whose corresponding class ID is 12 in the base table. In this case, the coordinator node may indicate the data node 2 to query the data at the storage location for data that is of three attributes the class ID, the student name, and the enrollment document ID and whose corresponding class ID is 12, as shown in a process d in FIG. 10.
(5) After receiving the global secondary index query indication delivered by the coordinator node, the data node 2 performs query based on the indication, and returns data obtained through query, namely, (12, 'B', 'D100132'), to the coordinator node, as shown in a process e in FIG. 10.

In the foregoing embodiment, when the attribute in the global secondary index does not cover all the attributes of the to-be-queried data, based on a distributed storage manner and a feature of the base table and the global secondary index, the first node may partially cover the location information in the global secondary index of the attribute to which the to-be-queried data belongs, the storage location of the to-be-queried data is determined, and the to-be-queried data may be obtained by querying the corresponding storage location in the base table. This can also avoid problems of a large processing amount and a low query speed that are caused by directly querying the full data in the base table, the data query speed and efficiency are improved to some extent.

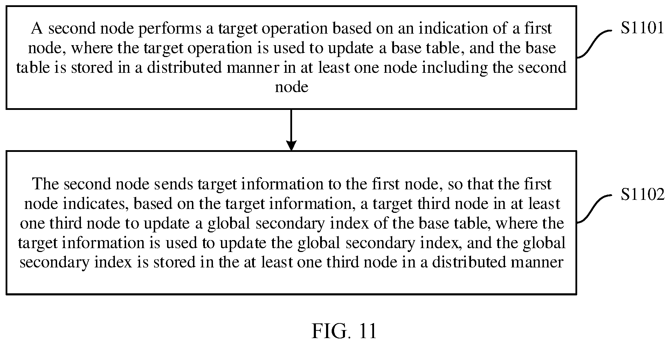

Refer to FIG. 11. A method for processing a base table and a global secondary index of the base table in a distributed database according to an embodiment of this application may include the following steps.

S1101: A second node performs a target operation based on an indication of a first node, where the target operation is used to update a base table, and the base table is stored in a distributed manner in at least one node including the second node.

S1102: The second node sends target information to the first node, so that the first node indicates, based on the target information, a target third node in at least one third node to update a global secondary index of the base table, where the target information is used to update the global secondary index, and the global secondary index is stored in the at least one third node in a distributed manner.

The second node may be the target second node in the foregoing embodiment, the first node may be the first node in the foregoing embodiment, the at least one node may be the at least one second node in the foregoing embodiment, and the at least one third node may be the at least one third node in the foregoing embodiment. For specific execution of the steps in the method, refer to the method in the foregoing embodiment. Details are not described herein again.

The following describes the method provided in this embodiment of this application with reference to a specific instance by using an example in which the first node is the coordinator node, the second node is the data node, and the third node is the data node in the foregoing embodiment, and the base table is applied to a mall system.

For example, a name of the base table in the foregoing scenario may be a base table 2 (table2), and the base table may include data shown in the following Table 5.

**Table 5 Data in the base table 2**

| Counter ID (counterid) | Cashier name (cashier) | Floor number (fno) |
|---|---|---|
| 10001 | A | 1 |
| 10001 | B | 1 |
| 10002 | C | 2 |
| 10003 | D | 3 |
| 10003 | E | 3 |
| 10004 | F | 3 |
| 10005 | G | 3 |
| 10006 | H | 4 |

The base table 2 shown in Table 5 may include three columns × eight rows of data. The three columns of data respectively belong to three attributes: the counter identity document (identity document, ID), the cashier name, and the floor number, each row of data corresponds to the information about a counter/cashier. In this case, when the base table in this embodiment of this application is the base table 2, attributes included in the base table are the three attributes: the counter ID, the cashier name, and the floor number shown in Table 5. Table definition information (or table attribute information) of the base table 2 shown in Table 5 is shown in Table 6 below.

**Table 6 Base table definition information**

| Table name | Base table 2 (table2) | | |
|---|---|---|---|
| Attribute column # | Column name | Data type | Remark |
| 1 | counterid | integer | Counter ID, distribution key, primary key column 1 |
| 2 | cashier | varchar(10) | Cashier name, primary key column 2 |
| 3 | fno | integer | Floor number |
| Distribution key | range (counterid) partition ([10001, 10003], [10004, 10006]) | | |
| Primary key | (counterid, cashier) | | |

It may be determined based on the foregoing Table 6 that a name of the base table is base table 2, and the base table includes three attributes, which are specifically three columns of data corresponding to the counter ID, the cashier name, and the floor number. The two attributes the counter ID and the cashier name are primary keys of the base table 2. The attribute the counter ID is a distribution key of the base table 2, and data in the base table 2 is distributed and stored in a plurality of second nodes in a range distribution manner. A partition (partition) manner is as follows: At least one row of data whose value of the counter ID falls within a range of [10001, 10003] is stored in a same node, and at least one row of data whose value of the counter ID falls within a range of [10004, 10006] is stored in a same node. Data in the two attributes the counter ID and the floor number is integer type data, and data in the attribute the cashier name is variable-length character string data. The information indicated in Table 6 may be stored in the first node and the at least one second node as metadata of the base table 2. Certainly, the metadata of the base table 2 includes but is not limited to the information indicated in Table 6, and may alternatively include more or less information than that in Table 6.

For example, the global secondary index of the base table 2 may be floor_gsi, and floor_gsi is a name of the global secondary index. The global secondary index may be used to search for cashier information at each layer in the mall.

Global secondary index definition information (or attribute information) of floor_gsi is shown in Table 7 below.

**Table 7 Global secondary index definition information of floor_gsi**

| Index name | floor_gsi | | |
|---|---|---|---|
| Attribute column # | Column name | Type | Remark |
| 1 | fno | integer | Floor number, distribution key, and index key |
| 2 | cashier | varchar(50) | Cashier name, additional key |
| Distribution key | range (fno) partition ([1, 2], [3, 4]) | | |
| Index | (fno) | | |
| Additional key | (cashier, location information, and version information) | | |

As shown in Table 7, the global secondary index floor_gsi includes two attributes in the base table 1: the floor number and the cashier name. The attribute the floor number is an index key and a distribution key of the global secondary index floor_gsi, and data in the global secondary index floor_gsi is distributed and stored in the plurality of third nodes in the range distribution manner. The attribute the cashier name is an additional key of the global secondary index floor_gsi. As shown in Table 7, the global secondary index floor_gsi may further include the location information and the version information that correspond to the data in the base table, and the location information and the version information are additional keys of the global secondary index floor_gsi. The information indicated in Table 7 may be stored in the first node and the at least one third node as metadata of the global secondary index floor_gsi. Certainly, the metadata of the global secondary index includes but is not limited to the information indicated in Table 7, and may alternatively include more or less information than that in Table 7. In this embodiment of this application, when the global secondary index of the base table is floor_gsi, the attribute in the global secondary index includes the floor number and the cashier name.

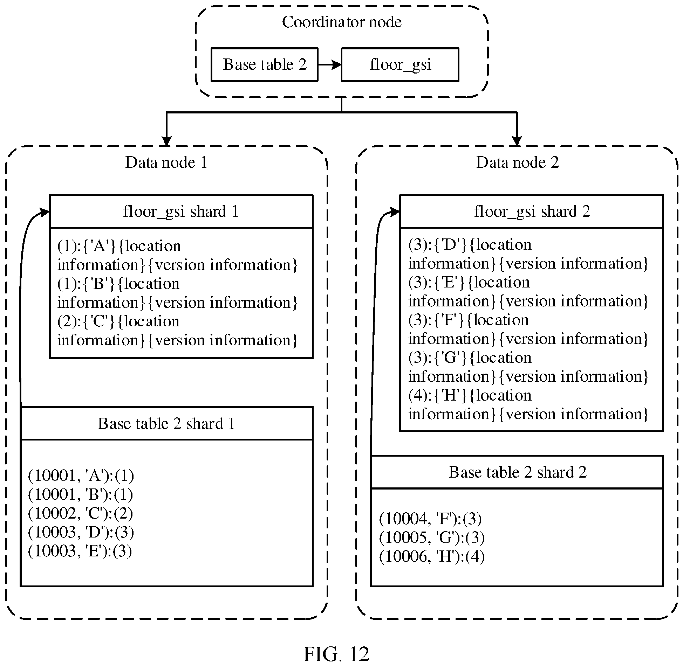

For example, the at least one second node and the at least one third node are the same and both include a data node 1 and a data node 2. As shown in FIG. 12, both data of the base table and data of the global secondary index floor_gsi are stored in the data node 1 and the data node 2 in a distributed manner. Data in the base table 2 stored in the data node 1 includes five rows of data in total from a first row to a fifth row, and the five rows of data are respectively: (10001, 'A'):{1}, (10001, 'B'):{1}, (10002, 'C'):{2}, (10003, 'D'):{2}, and (10003, 'E'):{2}. Data in the base table 2 stored in the data node 2 includes three rows of data in total from a six row to an eighth row, and the three rows of data are respectively: (10004, 'F'):{3}, (10005, 'G'):{3}, and (10006, 'H'):{4}. Data in the global secondary index floor_gsi stored in the data node 1 includes: (1):{'A'} and corresponding location information and version information; (1):{'B'} and corresponding location information and version information; and (2):{'C'} and corresponding location information and version information. Data in the global secondary index floor_gsi stored in the data node 2 includes: (3):{'D'} and corresponding location information and version information; (3):{'E'} and corresponding location information and version information; (3):{'F'} and corresponding location information and version information; (3):{'G'} and corresponding location information and version information; and (4):{'H'} and corresponding location information and version information. The first node stores metadata of the base table 2 and metadata of the global secondary index floor_gsi. The metadata of the base table indicates information like the base table definition information of the base table, and the metadata of the global secondary index indicates the global secondary index definition information of the global secondary index and the like.

It should be noted that the foregoing example is merely an example for describing a scenario and an implementation to which the method provided in embodiments of this application is applicable, and does not constitute a limitation on an application scenario and an implementation of the method provided in embodiments of this application.

The following describes, with reference to specific examples, the data query method and the method for updating the base table and the global secondary index of the base table in the foregoing scenario.

### Example 1: Scenario in which data query is directly performed by using the global secondary index

For example, in the mall data scenario corresponding to the base table 2 (table2), when the user expects to query names of all cashiers on a floor by using a known floor number 1, the user may enter a query statement on the coordinator node. The user may indicate, by using the entered query statement, a base table in which data that meets a condition needs to be queried. For example, in this scenario, the query statement entered by the user may be the following SQL statement: SELECT fno,cashier FROM table2 WHERE fno = 1. A meaning of the query statement is to query the base table 2 for the data of the attribute the cashier name corresponding to the floor number 1.

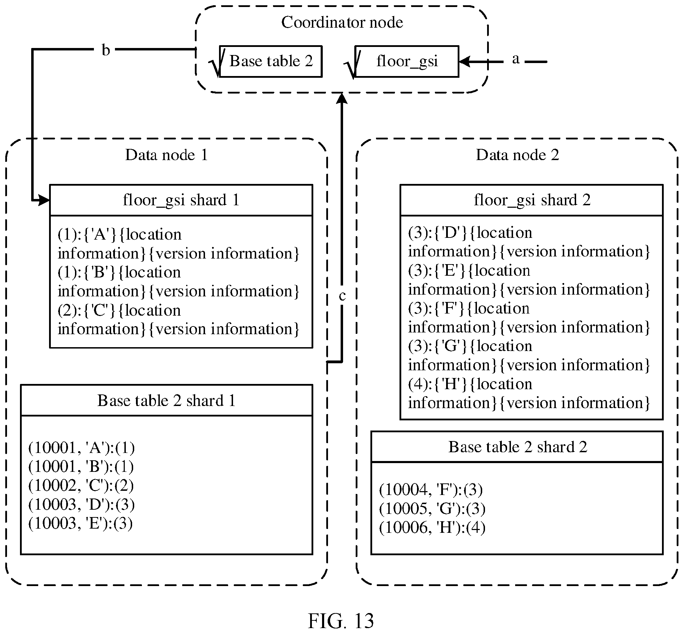

A procedure in which the coordinator node and the data node respond to the query statement may include the following steps.
(1) After receiving and parsing the query statement, the coordinator node may determine that the floor number in the query statement is not the distribution key of the base table 2, and may determine that the data that needs to be queried by using the query statement may be distributed on any node in the at least one data node configured to store the data of the base table 2. The performance of querying directly from the base table 2 may not be optimal. In this case, the coordinator node may determine, by checking all global secondary indexes in the base table, whether there is a global secondary index that includes an attribute covering all attributes in the query statement. Based on the check result, it can be determined that all attributes (the floor number and the cashier name) related to the query statement are exactly covered by attributes (the floor number and the cashier name) in the global secondary index floor_gsi. In this case, it may be determined that a result obtained by directly querying the global secondary index floor_gsi for the data that needs to be queried by using the query statement is equivalent to a result obtained by querying the base table 2. Therefore, the coordinator node may determine that the data that needs to be queried by using the query statement can be directly obtained by querying the global secondary index floor_gsi, as shown in a process a in FIG. 13.
   A tick marked at floor_gsi in FIG. 13 indicates that an attribute in floor_gsi covers all attributes related to the query statement. Therefore, data that needs to be queried may be directly obtained by querying floor_gsi. A tick marked at the base table 2 in FIG. 13 indicates that data that needs to be queried may also be obtained by querying the base table 2.
(2) When determining that data can be directly obtained by querying the global secondary index floor_gsi, the coordinator node may determine, based on metadata of the global secondary index floor_gsi, that the floor number is a distribution key of floor_gsi, and data in floor_gsi is distributed in a range distribution manner. Therefore, the coordinator node may determine, based on the range distribution manner, a range to which the floor number 1 belongs, and determine, based on the range to which the floor number 1 belongs, that data corresponding to the floor number 1 is distributed in the data node 1 (datanode 1). In this case, the coordinator node may directly query the floor_gsi data stored on the data node 1 for the data that needs to be queried. As shown in a process b in FIG. 13, the coordinator node may send a global secondary index query indication to the data node 1, to indicate the data node 1 to query floor_gsi data stored in the data node 1 for data of two attributes in which the floor number is 1: the floor number and the cashier name.
(3) After receiving the global secondary index query indication delivered by the coordinator node, the data node 1 performs query based on the indication, and returns data obtained through query, namely, (1):{'A'} and (1):{'B'}, to the coordinator node, as shown in a process c in FIG. 13.

Based on the foregoing manner, the coordinator node may query the GSI in the single data node and obtain the data that needs to be queried, and does not need to traverse all data nodes. Therefore, a query speed and efficiency are high.

A final execution plan of the foregoing query process is as follows:

```
     Plan:
     Data Node Scan
     Node name: datanode 1
     Index Only Scan using floor_gsi
     Index condition: (fno = 1)
```

The foregoing execution plan is executed from bottom to top, and a meaning of the foregoing execution plan is: performing index scanning on the global secondary index floor_gsi on the data node 1, determining that fno = 1 is true, and returning all results.

### Example 2: Scenario in which data query is performed based on the global secondary index for table access by index row

For example, in the mall data scenario corresponding to the base table 2 (table2), when the user expects to search for all counter IDs on a floor by using a known floor number 3, the user may enter a query statement on the coordinator node. The user may indicate, by using the entered query statement, a base table in which data that meets a condition needs to be queried. For example, in this scenario, the query statement entered by the user may be the following SQL statement: SELECT fno, counterid FROM table2 WHERE fno = 3. A meaning of the query statement is to query the base table 2 for data that is of the two attributes the floor number and the counter ID and whose corresponding floor number is 12.

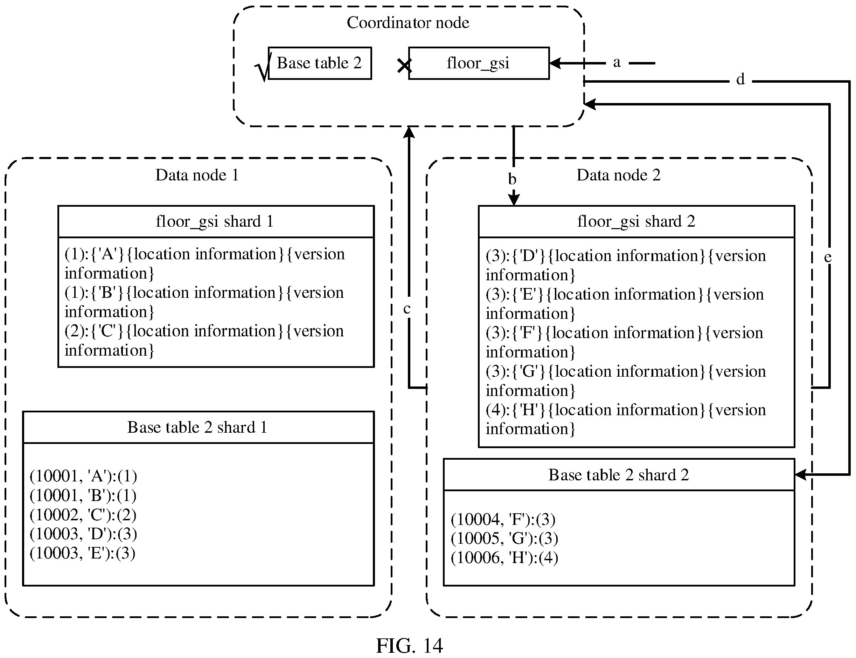

A procedure in which the coordinator node and the data node respond to the query statement may include the following steps.
(1) After receiving and parsing the query statement, the coordinator node may determine that the floor number in the query statement is not the distribution key of the base table 2, and may determine that the data that needs to be queried by using the query statement may be distributed on any node in the at least one data node configured to store the data of the base table 2. The performance of querying directly from the base table 2 may not be optimal. In this case, the coordinator node may determine, by checking all global secondary indexes in the base table, whether there is a global secondary index that includes an attribute covering all attributes in the query statement. It may be determined, based on a check result, that the global secondary index of the base table 2 does not include a global secondary index that can cover all attributes (the floor number and the counter ID) related to the query statement. In this case, it may be determined that the data that needs to be queried by using the query statement cannot be directly obtained by querying the global secondary index of the base table 2, and it is required to return to the base table 2 for data query, as shown in a process a in FIG. 14.
   A cross marked at floor_gsi in FIG. 14 indicates that none of attributes in floor_gsi covers all attributes related to the query statement. Therefore, data that needs to be queried cannot be directly obtained by querying floor_gsi. A tick marked at the base table 2 in FIG. 14 indicates that data that needs to be queried may be obtained by querying the base table 2.
(2) When determining that data cannot be directly obtained by querying the global secondary index of the base table 2, the coordinator node may select, from the global secondary index of the base table 2, a global secondary index that covers some attributes in the query statement, determine, based on the global secondary index, a data node that stores the data that needs to be queried, and then query the determined data node for the data that needs to be queried. For example, the global secondary index floor_gsi of the base table 2 covers some attributes (floor numbers) in the query statement, and an attribute having a value condition in the query statement, namely, the floor number (a value of the value condition = 3), is a distribution key of the global secondary index floor_gsi. In this case, it may be determined that location information corresponding to a floor number whose value is 3 in the global secondary index floor_gsi is also location information corresponding to data that needs to be queried and that is indicated by the query statement. Because the distribution manner of the global secondary index floor_gsi is range distribution, the coordinator node may determine, in the range distribution manner, a range corresponding to the floor number 3, and determine, based on the range, that data corresponding to the floor number 3 in the global secondary index floor_gsi is distributed in the data node 2 (datanode2) in a centralized manner. In this case, the coordinator node may indicate the data node 2 to query floor_gsi for location information corresponding to data whose corresponding floor number is 3, as shown in a process b in FIG. 14.
(3) After receiving the indication of the coordinator node, the data node 2 queries the stored floor_gsi for location information corresponding to the data whose floor number is 3, and returns the location information obtained through query to the coordinator node, as shown in a process c in FIG. 14.
(4) After obtaining, from the data node 2, the location information corresponding to the data whose floor number is 3 in floor_gsi, the coordinator node may determine, based on the location information, a data node that is configured to store the data whose corresponding floor number is 3 in the base table 2, namely, the data node 2, and a storage location, in the data node, of data whose corresponding floor number is 3 in the base table. In this case, the coordinator node may indicate the data node 2 to query the data at the storage location for data that is of two attributes the floor number and the counter ID and whose corresponding floor number is 3, as shown in a process d in FIG. 14.
(5) After receiving the global secondary index query indication delivered by the coordinator node, the data node 2 performs query based on the indication, and returns data obtained through query, namely, (3):{'D'}, (3):{'E'}, (3):{'F'}, and (3): {'G'}, to the coordinator node, as shown in a process e in FIG. 14.

Based on the foregoing method, the coordinator node may query a specific storage location in the base table for the to-be-queried data. This can avoid problems of a large processing amount and a low query speed that are caused by directly querying full data in the base table, and improve a speed and efficiency of data query to some extent.

### Example 3: Data adding scenario

For example, in the enrollment data scenario corresponding to the base table 2 (table2), when the user expects to register information about a new cashier, the user may enter the insert statement on the coordinator node to trigger the coordinator node and the data node to perform a procedure of inserting the information about the cashier into the base table. The inserted data includes cashier information that is expected to be registered by the user, and specifically includes a cashier name X, a counter ID 10006, and a floor 4. For example, the insert statement entered by the user in this scenario may be the following SQL statement: INSERT INTO table2 (counterid, cashier, fno) VALUES (10006, 'X', 4). A meaning of the insert statement is to insert a group (a row) of data whose counterid = 10006, cashier = X, and fno = 4 into the base table 2.

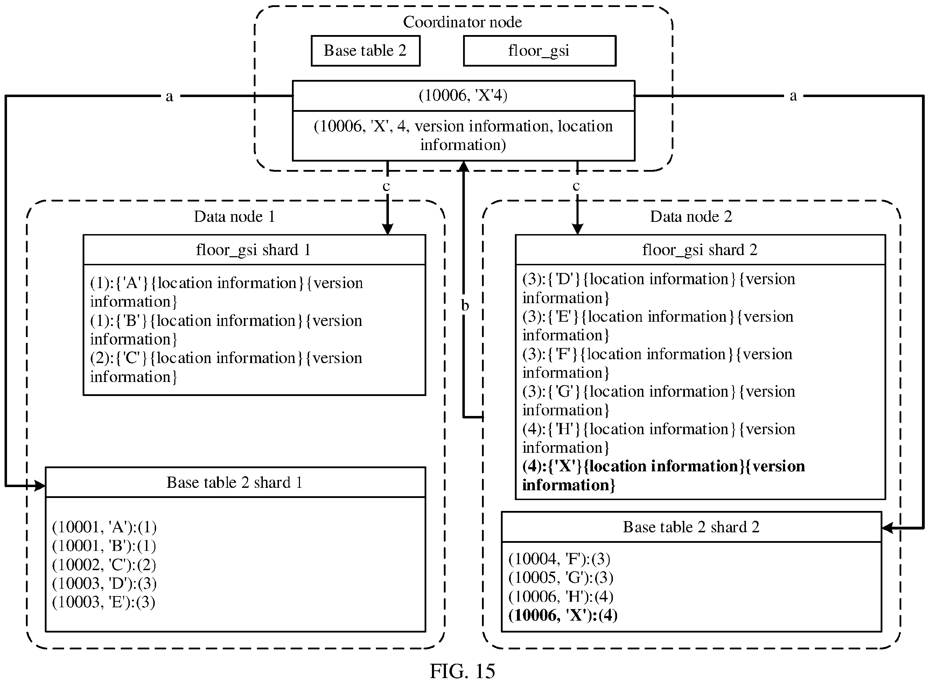

A procedure in which the coordinator node and the data node respond to the insert statement may include the following steps.
(1) As shown in a process a in FIG. 15, after receiving and parsing the insert statement, the coordinator node may send an indication for inserting data to all data nodes that store the base table 2, namely, the data node 1 and the data node 2.
   For example, the indication delivered by the coordinator node to the data node may be the following SQL statement: INSERT INTO table2 VALUES (10006, 'X', 4) RETURNING cashier, fno, {version information}, {location information}. A meaning of the statement is to insert a group of data whose values are 10006, 'X', and 4 into the base table 2, and return values of data that is in the inserted data and that belongs to the three attributes the cashier name and the floor number, and version information and location information that correspond to the inserted data. Optionally, the version information may be optional information.
(2) As shown in a process b in FIG. 15, after receiving the indication for inserting data, the data node 2 determines that the data node 2 is a node configured to store the inserted data, and may insert the data into the base table 2, and return, to the coordinator node, data (namely, 'X', 4) that is in the inserted data (10006, 'X', 4) and whose attribute is the same as the attribute of the global secondary index floor_gsi of the base table, and information like the location information and the version information that correspond to the inserted data.
   After receiving the indication for inserting data, the data node 1 determines that the data node 1 is not a node configured to store the inserted data, and may not perform any processing.
(3) After receiving the information returned by the data node 2, the coordinator node may calculate, based on the distribution key of the global secondary index of the base table, data nodes on which the global secondary index floor_gsi of the base table is located, namely, the data node 1 and the data node 2. After determining the data node 1 and the data node 2, the coordinator node may send, to the data node 1 and the data node 2, an indication for inserting global secondary index data into the global secondary index of the base table, as shown in a process c in FIG. 15.

For example, an indication delivered by the coordinator node to the data node 1 and the data node 2 for inserting the global secondary index data into floor_gsi may be the following SQL statement: INSERT INTO floor_gsi (fno, cashier, {version information}, {location information}) VALUES (4, 'X', {version value}, {location value}). A meaning of the statement is to insert, into the global secondary index floor_gsi, data whose floor number is 4, cashier name is X, value of the version information is a version value, and value of the location information is a location value.

A final execution plan of the foregoing procedure is as follows:

```
     Plan:
     Insert GSI(s) on table2
     Node name: All datanodes
     Remote Query: INSERT INTO floor_gsi (fno,
cashier, {version information}, {location information}) VALUES
 (4, 'X', {version value}, {location value})
     Insert on table2
     Output: cashier, fno, {version information}, {location information}
     Node name: alldatanode
     Remote Query: INSERT INTO table2 VALUES
(10006, 'X', 4) RETURNING counterid, cashier, fno, {version
 information}, {location information}
```

The execution plan is executed from bottom to top, and a meaning of the execution plan is as follows:
The following statement is sent to all data nodes: INSERT INTO table2 VALUES (10006, 'X', 4) RETURNING cashier, fno, {version information}, {location information}, so that the data node updates the data included in the base table 2, namely, the inserted data. After inserting data into the base table 2, the data node 2 returns values of the following attributes in the inserted data to the coordinator node: cashier, fno, {version information}, and {location information}. After receiving the information returned by the data node 2, the coordinator node sends the following statement to all data nodes, namely, the data node 1 and the data node 2: INSERT INTO floor_gsi (fno, cashier, {version information}, {location information}) VALUES (4, 'X', {version value}, {location value}), so that the data node 1 and the data node 2 update the data in floor_gsi.

### Example 4: Data update scenario

For example, in the mall data scenario corresponding to the base table 2 (table2), when the user expects to update the cashier name corresponding to the counter ID 10005 from "G" to "J," the user may enter the update statement on the coordinator node to trigger the coordinator node and the data node to perform a process of updating the cashier name. For example, the update statement entered by the user may be the following SQL statement: UPDATE table2 SET cashier = 'J' WHERE counterid = 10005 AND cashier = 'G'. A meaning of the update statement is to change a cashier name in a row of data whose counter ID is 10005 and cashier name is G in the base table 2 to J.

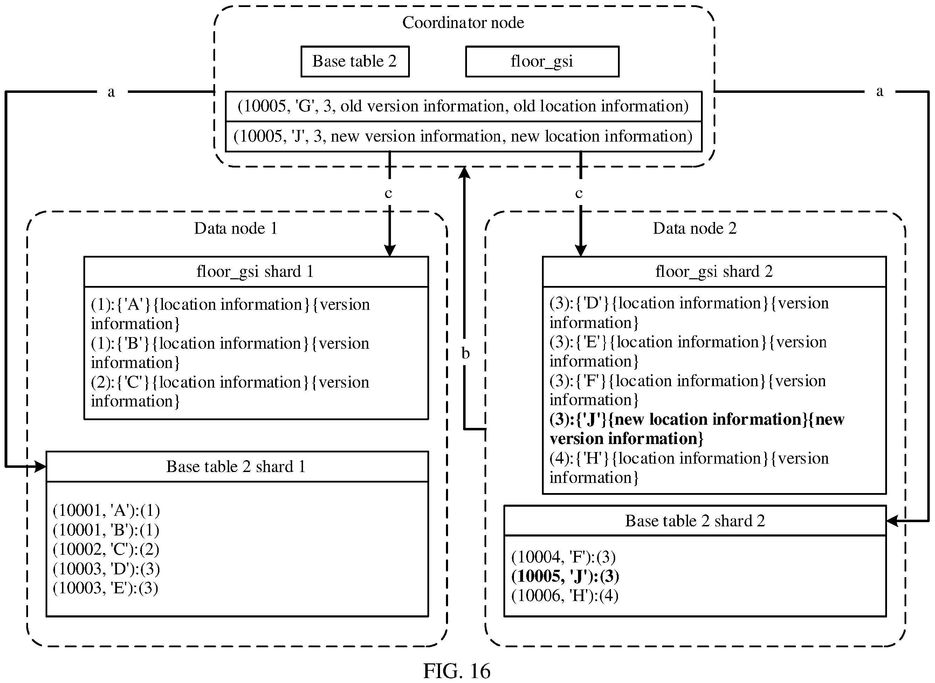

A procedure in which the coordinator node and the data node respond to the insert statement may include the following steps.
(1) As shown in a process a in FIG. 16, after receiving and parsing the update statement, the coordinator node may send an indication for updating data to all data nodes that store the base table 2, namely, the data node 1 and the data node 2.
   For example, the indication delivered by the coordinator node to the data node may be the following SQL statement: UPDATE table2 SET cashier = 'J' WHERE counterid = 10005 AND cashier ='G' RETURNING old cashier, old fno, {old version information}, {old location information}, new cashier, new fno, {new version information}, {new location information}. A meaning of the statement is to update and set the cashier name in the row of data whose counter ID is 10005 and cashier name is G in the base table 2 to "J", and return values of data that is in pre-update data and that belongs to two attributes: the cashier name and the floor number, and version information and location information that correspond to the pre-update data (namely, a row of data whose counter ID is 10005 before update); and values of data that is in post-update data (namely, pre-update data corresponding to the row of data whose counter ID is 10005 before update) and that belongs to two attributes: the cashier name and the floor number, and version information and location information that correspond to the post-update data. In the statement, the old cashier and the old fno are respectively values of data that is in pre-update data and that belongs to the two attributes the cashier name and the floor number, and the new cashier and the new fno are respectively values of data that is in post-update data and that belongs to the two attributes the cashier name and floor number. Optionally, the version information may be optional information.
(2) After receiving the indication for updating data, the data node 2 determines that the data node 2 is a node configured to store to-be-updated data, and may update, based on the indication, a value that is of the cashier name in the row of data whose counter ID is 10005 and cashier name is G and that is stored in the base table 2 to "J". After update, the data node 2 returns, to the coordinator node, data that is in the row of data before and after update (before update: 10005, 'G', 3; after update: 10005, 'J', 3) and whose attribute is the same as the attribute of the global secondary index floor_gsi of the base table, and information like location information and version information that correspond to the row of data before and after the update, as shown in a process b in FIG. 16.
   After receiving the indication for updating data, the data node 1 determines that the data node 1 is not a node configured to store to-be-updated data, and may not perform any processing.
(3) After receiving the information returned by the data node 2, the coordinator node may calculate, based on the distribution key of the global secondary index of the base table, data nodes on which the global secondary index floor_gsi of the base table is located, namely, the data node 1 and the data node 2. After determining the data node 1 and the data node 2, the coordinator node may send, to the data node 1 and the data node 2, an indication for updating the global secondary index data in the base table, as shown in a process c in FIG. 16.

For example, an indication delivered by the coordinator node to the data node 1 and the data node 2 for updating floor_gsi data may be the following SQL statement: UPDATE floor_gsi SET fno = 3,cashier = 'J', {version information} = {new version value}, {location information} = {new location value} WHERE {location information} = {old location value }. A meaning of the statement is to update, in the global secondary index floor_gsi, data whose value of corresponding location information is the old location value to data whose value of floor number is 3, value of cashier name is J, value of the version information is the new version value, and value of the location information is the new location value.

A final execution plan of the foregoing procedure is as follows:

```
     Plan:
     Update GSI(s) on table2
     Node fno: All datanodes
     Remote Query: UPDATE floor_gsi SET fno = 3,
cashier = 'J', {version information} = {new version value},
 {location information} = {new location value}
WHERE {location information} = {old location value}
     Update on table2
     Output: old cashier, old fno, {old version information},
{old location information}, new cashier, new fno, {new
     version information}, {new location information}
     Node fno: All datanodes
     Remote Query: UPDATE table2 SET cashier = 'J'
WHERE counterid = 10005 AND cashier = 'G' RETURNING
 old cashier, old fno, {old version information},
{old location information}, new cashier, new fno, {new version
 information}, {new location information}
```

The execution plan is executed from bottom to top, and a meaning of the execution plan is as follows:
The following statement is sent to all data nodes (the data node 1 and the data node 2): UPDATE table2 SET cashier = 'J' WHERE counterid = 10005 AND cashier = 'G' RETURNING old cashier, old fno, {old version information}, {old location information}, new cashier, new fno, {new version information}, {new location information}. Because a row of data whose counter ID is 10005 and cashier name is G is stored on the data node 2, only data node 2 updates the cashier name in the row of data to J, and data node 1 does not perform any processing. The data node 2 updates the row of data that is in the base table 2 and whose counter ID is 10005 and cashier name is G, and then returns, to the coordinator node, values of the following attributes in the row of data before and after update: cashier, fno, {version information}, and {location information}. After receiving the information returned by the data node 2, the coordinator node sends the following statement to all data nodes, namely, the data node 1 and the data node 2: UPDATE floor_gsi SET fno = 3, cashier = 'J', {version information} = {new version value}, {location information} = {new location value} WHERE {location information} = {old location value}, so that the data node 1 and the data node 2 update the data in floor_gsi.

### Example 5: Data deletion scenario

For example, in the mall data scenario corresponding to the base table 2 (table2), when the user expects to delete information about a counter from the base table 2, the user may enter the delete statement on the coordinator node to trigger the coordinator node and the data node to perform a procedure of deleting the information about the counter from the base table 2. Deleted data includes the information about the counter that is expected to be deleted by the user, and specifically includes a counter ID 10004, a cashier name F, and a floor number 3. For example, the delete statement entered by the user may be the following SQL statement: DELETE FROM table2 WHERE counterid = 10004. A meaning of the delete statement is to delete at least one row of data whose counterid is 10004 from the base table 2.

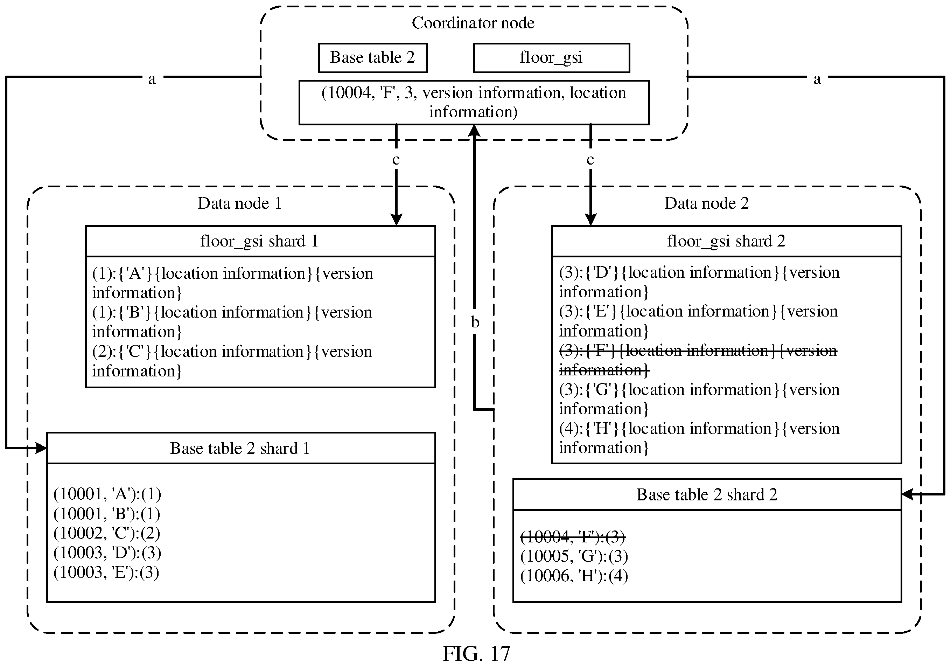

A procedure in which the coordinator node and the data node respond to the insert statement may include the following steps.
(1) As shown in a process a in FIG. 17, after receiving and parsing the delete statement, the coordinator node may send an indication for deleting data to all data nodes that store the base table 2, namely, the data node 1 and the data node 2.
   For example, the indication delivered by the coordinator node to the data node may be the following SQL statement: DELETE FROM table2 WHERE counterid = 10004 RETURNING cashier, fno, {version information}, {location information}. A meaning of the statement is to delete at least one row of data whose counterid = 10004 from the base table 2, and return values of data that is in the deleted data and that belongs to two attributes the counter ID and the cashier name, and version information and location information that correspond to the deleted data. Optionally, the version information may be optional information.
(2) After receiving the indication for deleting data, the data node 2 determines that the data node 2 is a node configured to store the deleted data, and may perform a deletion operation on corresponding data (10004, 'F', 3) in the base table 2. After performing the deletion operation, the data node 2 returns, to the coordinator node, data that is in the deleted data and whose attribute is the same as the attribute of the global secondary index floor_gsi of the base table, and information like location information and version information that correspond to the deleted data, as shown in a process b in FIG. 17.
   After receiving the indication for deleting data, the data node 1 determines that the data node 1 is not a node configured to store to-be-deleted data, and may not perform any processing.
(3) After receiving the information returned by the data node, the coordinator node may calculate, based on the distribution key of the global secondary index of the base table, data nodes on which the global secondary index floor_gsi of the base table is located, namely, the data node 1 and the data node 2. After determining the data node 1 and the data node 2, the coordinator node may send, to the data node 1 and the data node 2, an indication for deleting global secondary index data into the global secondary index of the base table, as shown in a process c in FIG. 17.

For example, an indication delivered by the coordinator node to the data node 1 and the data node 2 for deleting the global secondary index data in floor_gsi may be the following SQL statement: DELETE FROM floor_gsi WHERE {location information} = {location value}. A location value in the statement is a value of location information corresponding to a row of data whose counterid = 10004. A meaning of the statement is to delete data whose value of the location information is the location value from the global secondary index floor_gsi.

A final execution plan of the foregoing process is as follows:

```
     Plan:
     Delete GSI(s) on table2
     Node name: All datanodes
     Remote Query: DELETE FROM floor_gsi WHERE {location information} = {location value}
     Delete on table2
     Output: cashier, fno, {version information}, {location information}
     Node name: All datanodes
     Remote Query: DELETE FROM table2 WHERE counterid = 10004 RETURNING cashier, fno, {version
 information}, {location information}
     
```

The execution plan is executed from bottom to top, and a meaning of the execution plan is as follows:
The following statement is sent to all data nodes (the data node 1 and the data node 2): DELETE FROM table2 WHERE counterid = 10004 RETURNING cashier, fno, {version information}, {location information}. Because a row of data whose counter ID is 10004 is stored in the data node 2, only the data node 2 performs a deletion operation on the row of data, and the data node 1 does not perform any processing. After performing the delete operation on the row of data, the data node 2 returns values of the following attributes in the deleted data to the coordinator node: cashier, fno, {version information}, and {location information}. After receiving the information returned by the data node 2, the coordinator node sends the following statement to all data nodes, namely, the data node 1 and the data node 2: DELETE FROM floor_gsi WHERE {location information} = {location value}, so that the data node 1 and the data node 2 delete corresponding data in floor_gsi.

It should be noted that the specific implementation procedure provided in each embodiment is merely an example of a method procedure applicable to embodiments of this application. For specific implementation, refer to the descriptions in the foregoing embodiments. In addition, an execution sequence of the steps in each implementation procedure may be correspondingly adjusted based on an actual requirement, or another step may be added, or some steps may be reduced. This is not specifically limited in embodiments of this application.

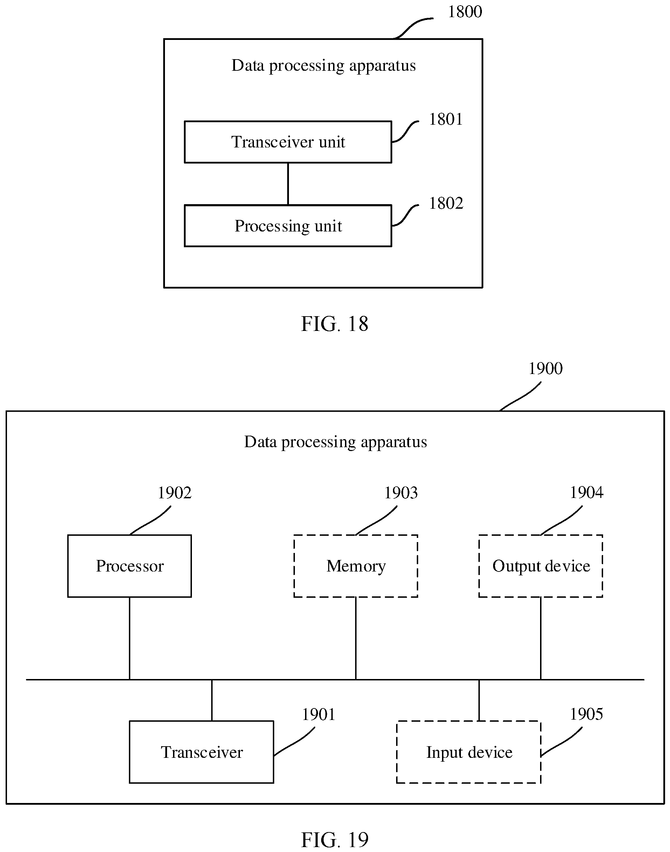

Based on the foregoing embodiments and a same concept, an embodiment of this application further provides a data processing apparatus, configured to implement a function of the node provided in embodiments of this application. FIG. 18 shows a data processing apparatus 1800 according to this application. The data processing apparatus 1800 may be a node device, or may be a chip or a chip system in a node device.

Specifically, the data processing apparatus 1800 includes a transceiver unit 1801 and a processing unit 1802. The transceiver unit 1801 is configured to receive data sent by an external data processing apparatus and send data to the external data processing apparatus.

When the data processing apparatus 1800 is implemented as the first node in the foregoing embodiments, the transceiver unit 1801 and the processing unit 1802 cooperate with each other, and may be configured to perform the method, provided in embodiments of this application, performed by the first node.

When the data processing apparatus 1800 is implemented as the second node in the foregoing embodiments, the transceiver unit 1801 and the processing unit 1802 cooperate with each other, and may be configured to perform the method, provided in embodiments of this application, performed by the second node.

When the data processing apparatus 1800 is implemented as the third node in the foregoing embodiments, the transceiver unit 1801 and the processing unit 1802 cooperate with each other, and may be configured to perform the method, provided in embodiments of this application, performed by the third node.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Based on the foregoing embodiments and a same concept, an embodiment of this application further provides a data processing apparatus, configured to implement a function of the node provided in embodiments of this application. FIG. 19 shows a data processing apparatus 1900 according to an embodiment of this application. The data processing apparatus 1900 may be a node device, or may be a chip or a chip system in a node device.

In some embodiments of this application, the data processing apparatus 1900 may alternatively be a network device, an electronic device, a chip, an integrated circuit, or another structure that can perform the method provided in embodiments of this application.

For example, the data processing apparatus 1900 includes a transceiver 1901 and at least one processor 1902. The processor 1902 is coupled to the transceiver 1901. The coupling in embodiments of this application may be indirect coupling or a communication connection between apparatuses, units, or modules in an electrical form, a mechanical form, or another form, and is used for information exchange between the apparatuses, the units, or the modules.

Specifically, the transceiver 1901 may be a circuit, a bus, a communication interface, or any other module that may be configured to perform information exchange, and may be configured to receive or send information.

Optionally, the data processing apparatus 1900 may further include a memory 1903. The memory 1903 is coupled to the transceiver 1901 and the processor 1902, and is configured to store program instructions.

The processor 1902 is configured to invoke the program instructions stored in the memory 1903, so that the data processing apparatus 1900 performs the method that is performed by the first node, the second node, or the third node and that is in the methods provided in embodiments of this application.

The transceiver 1901 is configured to receive and send a radio frequency signal, and is coupled to a receiver and a transmitter of the data processing apparatus 1900. The transceiver 1901 communicates with a communication network and another device, for example, a wireless local area network (Wireless Local Area Networks, WLAN), a Bluetooth communication network, or a mobile network, by using the radio frequency signal.

In a specific implementation, the memory 1903 may include a high-speed random access memory, and may further include a non-volatile memory, for example, one or more magnetic disk storage devices, a flash device, or another non-volatile solid-state storage device. The memory 1903 may store an operating system (which is referred to as a system for short below), for example, an embedded operating system like Android, iOS, Windows, or Linux. The memory 1903 may be configured to store a program for implementing this embodiment of this application. The memory 1903 may further store a network communication program. The network communication program may be used to communicate with one or more additional devices, one or more user equipments, and one or more network devices.

The processor 1902 may be a general-purpose central processing unit (Central Processing Unit, CPU), a microprocessor, an application-specific integrated circuit (Application-Specific Integrated Circuit, ASIC), or one or more integrated circuits configured to control program execution of the solutions in this application.

In some embodiments, the data processing apparatus 1900 may further include an output device 1904 and an input device 1905. The output device 1904 communicates with the processor 1902, and may display information in a plurality of manners. For example, the output device 1904 may be a liquid crystal display (Liquid Crystal Display, LCD), a light emitting diode (Light Emitting Diode, LED) display device, a Cathode Ray Tube (cathode ray tube, CRT) display device, a projector (projector), or the like. The input device 1905 communicates with the processor 1902, and may receive an input from a user in a plurality of manners. For example, the input device 1905 may be a mouse, a keyboard, a touchscreen device, or a sensor device. To facilitate use of the output device 1904 and the input device 1905 by a user, in some embodiments, the memory 1903 may further store a user interface program, and the user interface program may vividly display content of an application by using a graphical operation interface, and receive, by using an input control like a menu, a dialog box, or a button, a control operation performed by the user on the application.

In an example, when the data processing apparatus 1900 is implemented as the first node in the foregoing embodiments, the transceiver 1901 the processor 1902 cooperate with each other, and may be configured to perform the method, provided in embodiments of this application, performed by the first node.

In an example, when the data processing apparatus 1900 is implemented as the second node in the foregoing embodiments, the transceiver 1901 the processor 1902 cooperate with each other, and may be configured to perform the method, provided in embodiments of this application, performed by the second node.

In an example, when the data processing apparatus 1900 is implemented as the third node in the foregoing embodiments, the transceiver 1901 the processor 1902 cooperate with each other, and may be configured to perform the method, provided in embodiments of this application, performed by the third node.

Based on the foregoing embodiments and a same concept, an embodiment of this application further provides a data processing apparatus. The apparatus includes a memory and at least one processor. The memory is configured to store a computer program. The processor is configured to execute the computer program stored in the memory, to implement the method provided in the foregoing embodiments.

Based on the foregoing embodiments and a same concept, an embodiment of this application further provides a distributed database system, including the first node, the at least one second node, and the at least one third node in the foregoing embodiments.

Based on the foregoing embodiments and a same concept, an embodiment of this application further provides a computer storage medium. The computer storage medium stores a computer-readable program. When the computer-readable program is run on a computer, the computer is enabled to perform the method provided in the foregoing embodiments.

Based on the foregoing embodiments and a same concept, an embodiment of this application further provides a computer program product. When the computer program product runs on a computer, the computer is enabled to perform the method provided in the foregoing embodiments.

Based on the foregoing embodiments and a same concept, an embodiment of this application further provides a chip. The chip is configured to read a computer program stored in a memory, to perform the method provided in the foregoing embodiments.

Based on the foregoing embodiments and a same concept, an embodiment of this application further provides a chip system. The chip system includes a processor, configured to support a computer apparatus in implementing the method provided in the foregoing embodiments.

In a possible design, the chip system further includes a memory, and the memory is configured to store a program and data that are necessary for a computer apparatus.

In a possible design, the chip system includes a chip, or includes a chip and another discrete component.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A method for processing a base table and a global secondary index of the base table in a distributed database, applied to a first node, wherein the method comprises:
in response to a first indication, indicating a target second node in at least one second node to perform a target operation, wherein the first indication indicates to update a base table, the base table is stored in the at least one second node in a distributed manner, and the target operation is used to update the base table;
receiving target information from the target second node, wherein the target information is used to update a global secondary index of the base table, and the global secondary index is stored in at least one third node in a distributed manner; and
indicating, based on the target information, a target third node in the at least one third node to update the global secondary index.

2. The method according to claim 1, wherein the global secondary index comprises at least one attribute in the base table and location information, and the location information indicates a location, in the base table, of a tuple to which data in the at least one attribute belongs.

3. The method according to claim 2, wherein location information corresponding to each piece of data comprises first location information and second location information, the first location information indicates a node in which a tuple to which the corresponding data belongs is located, and the second location information indicates a storage location, in the node, of the tuple to which the corresponding data belongs.

4. The method according to claim 3, wherein the target information comprises first target data and location information corresponding to changed data, or the target information comprises first target data, target distribution key data, and second location information corresponding to changed data; and
the first target data is data that belongs to the at least one attribute and that is comprised in the changed data, the changed data is data in which there is a difference between first base table data and second base table data, the first base table data is data comprised in the base table before the base table is updated, the second base table data is data comprised in the base table after the base table is updated, the target distribution key data is data that is comprised in the changed data and that is used as a distribution key of the base table, and the target distribution key data is used to determine first location information corresponding to the changed data.

5. The method according to claim 4, wherein before the receiving target information from the target second node, the method further comprises:
when the first indication specifically indicates to update a part of data comprised in the base table, determining that there is an intersection between an attribute to which the part of data belongs and the at least one attribute.

6. The method according to claim 4 or 5, wherein the indicating, based on the target information, a target third node in the at least one third node to update the global secondary index comprises:
when the target information comprises the first target data, the target distribution key data, and the second location information corresponding to the changed data, determining, based on the target distribution key data, the first location information corresponding to the changed data; and
sending update information to the target third node, and indicating the target third node to update, based on the update information, data that is in the global secondary index and that is stored in the target third node, wherein the update information comprises the first location information corresponding to the changed data and information other than the target distribution key data in the target information, wherein
the target third node is each of the plurality of third nodes; or the target third node is a node that is in the at least one third node and that is configured to store the first target data.

7. The method according to claim 4 or 5, wherein the indicating, based on the target information, a target third node in the at least one third node to update the global secondary index comprises:
sending the target information to the target third node, and indicating the target third node to update, based on the target information, data that is in the global secondary index and that is stored in the target third node, wherein
the target third node is each of the plurality of third nodes; or the target third node is a node that is in the at least one third node and that is configured to store the first target data.

8. The method according to any one of claims 2 to 7, wherein the method further comprises:
receiving a second indication, wherein the second indication indicates to obtain second target data that meets a first condition and that is in the base table;
determining, based on the second indication, an attribute to which the second target data belongs; and
when the at least one attribute comprises all attributes to which the second target data belongs, selecting, from the data comprised in the global secondary index, the second target data that meets the first condition.

9. The method according to claim 8, wherein the method further comprises:
when the at least one attribute does not comprise all the attributes to which the second target data belongs, and there is an intersection between a target attribute in the at least one attribute and the attribute to which the second target data belongs, determining the second target data based on the global secondary index, wherein data in the target attribute is used as an index key of the global secondary index.

10. The method according to claim 9, wherein the determining the second target data based on the global secondary index comprises:
selecting, from the data comprised in the global secondary index, third target data that meets a part or all of the first condition; and
obtaining, from a storage location indicated by location information corresponding to the third target data, the second target data that meets the first condition.

11. The method according to any one of claims 2 to 10, wherein the global secondary index further comprises version information, the version information indicates a version of the tuple to which the data in the at least one attribute belongs, and a version of each tuple is used to determine whether the corresponding tuple is valid.

12. A method for processing a base table and a global secondary index of the base table in a distributed database, applied to a second node, wherein the method comprises:
performing a target operation based on an indication of a first node, wherein the target operation is used to update a base table, and the base table is stored in a distributed manner in at least one node comprising the second node; and
sending target information to the first node, so that the first node indicates, based on the target information, a target third node in at least one third node to update a global secondary index of the base table, wherein the target information is used to update the global secondary index, and the global secondary index is stored in the at least one third node in a distributed manner.

13. The method according to claim 12, wherein the global secondary index comprises at least one attribute in the base table and location information, and the location information indicates a location, in the base table, of a tuple to which data in the at least one attribute belongs.

14. The method according to claim 13, wherein location information corresponding to each piece of data comprises first location information and second location information, the first location information indicates a node in which a tuple to which the corresponding data belongs is located, and the second location information indicates a storage location, in the node, of the tuple to which the corresponding data belongs.

15. The method according to claim 14, wherein the target information comprises first target data and location information corresponding to changed data, or the target information comprises first target data, target distribution key data, and second location information corresponding to changed data; and
the first target data is data that belongs to the at least one attribute and that is comprised in the changed data, the changed data is data in which there is a difference between first base table data and second base table data, the first base table data is data comprised in the base table before the base table is updated, the second base table data is data comprised in the base table after the base table is updated, the target distribution key data is data that is comprised in the changed data and that is used as a distribution key of the base table, and the target distribution key data is used to determine first location information corresponding to the changed data.

16. The method according to any one of claims 12 to 15, wherein the global secondary index further comprises version information, the version information indicates a version of the tuple to which the data in the at least one attribute belongs, and a version of each tuple is used to determine whether the corresponding tuple is valid.

17. A data processing apparatus, used in a first node, wherein the apparatus comprises a transceiver unit and a processing unit, wherein
the processing unit is configured to indicate, in response to a first indication by using the transceiver unit, a target second node in at least one second node to perform a target operation, wherein the first indication indicates to update a base table, the base table is stored in the at least one second node in a distributed manner, and the target operation is used to update the base table;
the transceiver unit is configured to receive target information from the target second node, wherein the target information is used to update a global secondary index of the base table, and the global secondary index is stored in at least one third node in a distributed manner; and
the processing unit is further configured to indicate, based on the target information and by using the transceiver unit, a target third node in the at least one third node to update the global secondary index.

18. The apparatus according to claim 17, wherein the global secondary index comprises at least one attribute in the base table and location information, and the location information indicates a location, in the base table, of a tuple to which data in the at least one attribute belongs.

19. The apparatus according to claim 18, wherein location information corresponding to each piece of data comprises first location information and second location information, the first location information indicates a node in which a tuple to which the corresponding data belongs is located, and the second location information indicates a storage location, in the node, of the tuple to which the corresponding data belongs.

20. The apparatus according to claim 19, wherein the target information comprises first target data and location information corresponding to changed data, or the target information comprises first target data, target distribution key data, and second location information corresponding to changed data; and
the first target data is data that belongs to the at least one attribute and that is comprised in the changed data, the changed data is data in which there is a difference between first base table data and second base table data, the first base table data is data comprised in the base table before the base table is updated, the second base table data is data comprised in the base table after the base table is updated, the target distribution key data is data that is comprised in the changed data and that is used as a distribution key of the base table, and the target distribution key data is used to determine first location information corresponding to the changed data.

21. The apparatus according to claim 20, wherein the processing unit is configured to:
before the transceiver unit receives the target information from the target second node, when the first indication specifically indicates to update a part of data comprised in the base table, determine that there is an intersection between an attribute to which the part of data belongs and the at least one attribute.

22. The apparatus according to claim 20 or 21, wherein when indicating, based on the target information and by using the transceiver unit, the target third node in the at least one third node to update the global secondary index, the processing unit is specifically configured to:
when the target information comprises the first target data, the target distribution key data, and the second location information corresponding to the changed data, determine, based on the target distribution key data, the first location information corresponding to the changed data; and
send, by using the transceiver unit, update information to the target third node, and indicate the target third node to update, based on the update information, data that is in the global secondary index and that is stored in the target third node, wherein the update information comprises the first location information corresponding to the changed data and information other than the target distribution key data in the target information, wherein
the target third node is each of the plurality of third nodes; or the target third node is a node that is in the at least one third node and that is configured to store the first target data.

23. The apparatus according to claim 20 or 21, wherein when indicating, based on the target information and by using the transceiver unit, the target third node in the at least one third node to update the global secondary index, the processing unit is specifically configured to:
send, by using the transceiver unit, the target information to the target third node, and indicate the target third node to update, based on the target information, data that is in the global secondary index and that is stored in the target third node, wherein
the target third node is each of the plurality of third nodes; or the target third node is a node that is in the at least one third node and that is configured to store the first target data.

24. The apparatus according to any one of claims 18 to 23, wherein the processing unit is configured to:
receive a second indication by using the transceiver unit, wherein the second indication indicates to obtain second target data that meets a first condition and that is in the base table;
determine, based on the second indication, an attribute to which the second target data belongs; and
when the at least one attribute comprises all attributes to which the second target data belongs, select, from the data comprised in the global secondary index, the second target data that meets the first condition.

25. The apparatus according to claim 24, wherein the processing unit is configured to:
when the at least one attribute does not comprise all the attributes to which the second target data belongs, and there is an intersection between a target attribute in the at least one attribute and the attribute to which the second target data belongs, determine the second target data based on the global secondary index, wherein data in the target attribute is used as an index key of the global secondary index.

26. The apparatus according to claim 25, wherein when determining the second target data based on the global secondary index, the processing unit is specifically configured to:
select, from the data comprised in the global secondary index, third target data that meets a part or all of the first condition; and
obtain, from a storage location indicated by location information corresponding to the third target data, the second target data that meets the first condition.

27. The apparatus according to any one of claims 17 to 26, wherein the global secondary index further comprises version information, the version information indicates a version of the tuple to which the data in the at least one attribute belongs, and a version of each tuple is used to determine whether the corresponding tuple is valid.

28. A data processing apparatus, used in a second node, wherein the apparatus comprises a transceiver unit and a processing unit, wherein
the processing unit is configured to perform a target operation based on an indication of a first node, wherein the target operation is used to update a base table, and the base table is stored in a distributed manner in at least one node comprising the second node; and
the transceiver unit is configured to send target information to the first node, so that the first node indicates, based on the target information, a target third node in at least one third node to update a global secondary index of the base table, wherein the target information is used to update the global secondary index, and the global secondary index is stored in the at least one third node in a distributed manner.

29. The apparatus according to claim 28, wherein the global secondary index comprises at least one attribute in the base table and location information, and the location information indicates a location, in the base table, of a tuple to which data in the at least one attribute belongs.

30. The apparatus according to claim 29, wherein location information corresponding to each piece of data comprises first location information and second location information, the first location information indicates a node in which a tuple to which the corresponding data belongs is located, and the second location information indicates a storage location, in the node, of the tuple to which the corresponding data belongs.

31. The apparatus according to claim 30, wherein the target information comprises first target data and location information corresponding to changed data, or the target information comprises first target data, target distribution key data, and second location information corresponding to changed data; and
the first target data is data that belongs to the at least one attribute and that is comprised in the changed data, the changed data is data in which there is a difference between first base table data and second base table data, the first base table data is data comprised in the base table before the base table is updated, the second base table data is data comprised in the base table after the base table is updated, the target distribution key data is data that is comprised in the changed data and that is used as a distribution key of the base table, and the target distribution key data is used to determine first location information corresponding to the changed data.

32. The apparatus according to any one of claims 28 to 31, wherein the global secondary index further comprises version information, the version information indicates a version of the tuple to which the data in the at least one attribute belongs, and a version of each tuple is used to determine whether the corresponding tuple is valid.

33. A data processing apparatus, comprising a memory and at least one processor, wherein
the memory is configured to store a computer program; and
the processor is configured to execute the computer program stored in the memory, to implement the method according to any one of claims 1 to 11, or implement the method according to any one of claims 12 to 16.

34. A computer-readable storage medium, wherein the computer-readable storage medium stores a computer-readable program, and when the computer-readable program is run on a computer, the computer is enabled to perform the method according to any one of claims 1 to 11, or perform the method according to any one of claims 12 to 16.

35. A computer program product, wherein when the computer program product runs on a computer, the computer is enabled to perform the method according to any one of claims 1 to 11, or perform the method according to any one of claims 12 to 16.
